# EUROPEAN PATENT SPECIFICATION

(11) **EP 3 982 663 B1**
(45) Date of publication and mention of the grant of the patent: **23.10.2024**
(21) Application number: 20830962.5
(22) Date of filing: 23.06.2020
(51) Int. Cl.: H04W 76/19, H04L 47/11, H04L 47/12, H04W 28/02, H04W 74/0808

(54) **CONFIGURATION METHOD AND TERMINAL DEVICE**
KONFIGURATIONSVERFAHREN UND ENDVORRICHTUNG
PROCÉDÉ DE CONFIGURATION ET DISPOSITIF TERMINAL

(30) Priority: 28.06.2019 CN 201910578751
(43) Date of publication of application: 13.04.2022
(73) Proprietor: Vivo Mobile Communication Co., Ltd., Dongguan, Guangdong 523860 (CN)
(72) Inventor: WU, Yumin, Dongguan, Guangdong 523860 (CN)
(74) Representative: Winter, Brandl - Partnerschaft mbB
(86) International application number: PCT/CN2020/097796
(87) International publication number: WO 2020/259512

(56) References cited:
- CN-A- 107 580 373
- CN-A- 108 696 893
- CN-A- 109 547 396
- US-A1- 2017 099 678
- US-A1- 2018 359 772
- VIVO: "Discussion on the Recovery Procedure of the UL LBT Failure", vol. RAN WG2, no. Reno, USA; 20190513 - 20190517, 3 May 2019 (2019-05-03), XP051709984, Retrieved from the Internet <URL:http://www.3gpp.org/ftp/tsg%5Fran/WG2%5FRL2/TSGR2%5F106/Docs/R2%2D1905626%2Ezip> [retrieved on 20190503]
- LG ELECTRONICS INC: "Handling of consecutive UL LBT failures", vol. RAN WG2, no. Reno, USA; 20190513 - 20190517, 13 May 2019 (2019-05-13), XP051731412, Retrieved from the Internet <URL:http://www.3gpp.org/ftp/Meetings%5F3GPP%5FSYNC/RAN2/Docs/R2%2D1908006%2Ezip> [retrieved on 20190513]
- OPPO: "LBT failure counter for uplink transmission in NR-U", vol. RAN WG2, no. Reno, USA; 20190513 - 20190517, 13 May 2019 (2019-05-13), XP051729118, Retrieved from the Internet <URL:http://www.3gpp.org/ftp/Meetings%5F3GPP%5FSYNC/RAN2/Docs/R2%2D1905615%2Ezip> [retrieved on 20190513]
- OPPO: "LBT Failure Counter for Uplink Transmission in NR-U", 3GPP TSG-RAN WG2 MEETING #106 R2-1905615, 17 May 2019 (2019-05-17), XP051729118, DOI: 20200911144428Y

## Description

### TECHNICAL FIELD

Embodiments of this disclosure relate to the field of communications technologies, and in particular, to a configuration method and a terminal device.

### BACKGROUND

In 5G communications systems, before transmitting an uplink signal in an unlicensed band, a transmit end (for example, user equipment (User Equipment, UE)) needs to perform listen before talk (Listen Before Talk, LBT) in the unlicensed band. If it is detected that the band is not occupied, that is, it is detected that the band is in an idle state, the transmit end may transmit signals. On the contrary, if it is detected that the band is being occupied, the transmit end cannot transmit signals.

In the related art, when the UE detects that the band is occupied, the uplink transmission fails. After the number of uplink transmission failures that the UE has experienced in this band reaches a predetermined number of times, the UE can further determine that an uplink congestion failure has occurred. In addition, before the UE determines an uplink congestion failure, a network device may configure a corresponding uplink congestion failure detection configuration (for example, the above-mentioned predetermined number of times) for the UE.

VIVO: "Discussion on the Recovery Procedure of the UL LBT Failure", 3GPP DRAFT; R2-1905626 discloses that the uplink LBT failure detection can be configured at least on PCell. Regarding the PSCell or SCell, if the network configures the RSSI/CO report of the PSCell or SCell, then the UE is able to report the uplink congestion status via the PCell. Otherwise, the UE is not able to report the congestion status of PSCell or SCell to the network.

LG ELECTRONICS INC: "Handling of consecutive UL LBT failures", 3GPP DRAFT; R2-1908006 discloses that when the RRC connection re-establishment is initiated after RLF declaration, UE usually performs the stored information based cell selection procedure. The UE is likely to select a cell on the PCell frequency to try the RRC connection re-establishment. If UE performs existing recovery procedures without changing the serving frequency when it detects consecutive UL LBT failures, it is quite probable that the UE fails in the recovery because the hidden node would be still there or it is likely that the frequency is still congested. If UE is allowed to declare the RLF when consecutive LBT failures are detected, the RRC connection re-establishment procedure should be modified so that the UE is able to avoid current PCell frequency where the RLF happened.

However, no efficient processing solutions exist after the terminal device has received the configuration information.

### SUMMARY

The present invention provides a configuration method and a terminal device as defined in the appended set of claims

### BRIEF DESCRIPTION OF DRAWINGS

FIG. 1 is a possible schematic structural diagram of a communications system in an embodiment of this disclosure;
FIG. 2 is a first schematic flowchart of a configuration method according to an embodiment of this disclosure;
FIG. 3 is a second schematic flowchart of a configuration method according to an embodiment of this disclosure;
FIG. 4 is a third schematic flowchart of a configuration method according to an embodiment of this disclosure;
FIG. 5 is a fourth schematic flowchart of a configuration method according to an embodiment of this disclosure;
FIG. 6 is a first schematic structural diagram of a terminal device according to an embodiment of this disclosure; and
FIG. 7 is a second schematic structural diagram of a terminal device according to an embodiment of this disclosure.

### DETAILED DESCRIPTION

The following clearly and completely describes the technical solutions in the embodiments of this disclosure with reference to the accompanying drawings in the embodiments of this disclosure.

It should be noted that "/" in this specification represents or, for example, A/B may represent A or B; and that the term "and/or" in this specification describes only an association relationship for describing associated objects and represents that three relationships may exist, for example, A and/or B may represent the following three cases: A alone, both A and B, and B alone.

It should be noted that for ease of clear description of the technical solutions of the embodiments of this application, in the embodiments of this application, terms "first," "second", and the like are used to distinguish the same items or similar items having substantially the same functions or roles, and those skilled in the art can understand that the words "first," "second", and the like do not constitute any limitation on a quantity and an execution order. For example, a first target operation and a second target operation are used to distinguish different operations, rather than describe a specific sequence of operations.

It should be noted that, in the embodiments of this disclosure, terms such as "exemplary" or "for example" are used to represent an example, an instance, or an illustration. Any embodiment or design solution described as "an example" or "for example" in the embodiments of this disclosure should not be construed as being preferred or advantageous over other embodiments or design solutions. To be precise, the terms such as "example" or "for example" are intended to present a related concept in a specific manner.

It should be noted that "of (of)", "corresponding or relevant (corresponding or relevant)", and "corresponding (corresponding)" in the embodiments of this application may be interchangeably used sometimes. It should be noted that expressed meanings are consistent when differences are not emphasized. "A plurality of" in the embodiments of this application means at least two.

For ease of understanding, the following describes some of the terms involved in the embodiments of this disclosure.

### 1. New radio unlicensed (New RAT Un-licensed, NR-U) System

In NR-U systems of 5G communications systems, an unlicensed band is used to transmit and receive data, and a signal transmit end needs to comply with rules for use of the unlicensed band. For an unlicensed band, before transmitting a signal, a transmit end needs to monitor whether the band is occupied (or idle), and the transmit end can transmit the signal if the band is not occupied (or idle). If the band is occupied, the transmit end cannot transmit the signal, meaning that listen before talk (Listen-Before-Talk, LBT) has failed. The transmit end may be a terminal device (for example, user equipment (User Equipment, UE)) or a network device. A terminal device is taken as an example of a transmit end for description in the embodiments of this disclosure.

Specifically, in a scenario in which the terminal device is to transmit an uplink signal, the terminal device may detect whether an uplink transmission failure (for example, an uplink signal transmission failure) has occurred, and detect whether an uplink congestion failure has occurred. For example, for an LBT failure, the terminal device may detect whether an uplink transmission failure has occurred, and whether an uplink congestion failure has occurred. That the terminal device experienced an uplink congestion failure means that a count of uplink transmission failures that the terminal device has experienced within a specified period of time reaches or exceeds a threshold (for example, a threshold configured by a network device).

Further, after the terminal device detects the uplink congestion failure, a procedure can be triggered to perform uplink congestion failure recovery, to allow the terminal device to successfully transmit uplink signals. When the terminal device is performing the uplink congestion failure recovery, if a count of uplink congestion failures within a specified period of time reaches a threshold (for example, a threshold configured by the network device), it indicates that the uplink congestion failure recovery has failed; and if within a specified period of time, no uplink congestion failure has occurred, or a count of uplink congestion failures does not reach the threshold, it indicates that the uplink congestion failure recovery is successful.

It should be noted that in a scenario in which a connection between the terminal device and the network device has been established, the network device can configure configuration information for uplink congestion failure detection for the terminal device, for example, configuration information for a timer and/or a counter for uplink congestion failure detection, to support the terminal device to perform uplink congestion failure detection based on the configuration information. For example, when the terminal device performs uplink congestion failure detection, if within a timing time of the timer, a count of uplink failures that the terminal device has experienced reaches or exceeds a count threshold of the counter, it is determined that an uplink congestion failure has occurred currently.

Similarly, in a scenario in which a connection between the terminal device and the network device has been established, the network device can configure configuration information for uplink congestion failure recovery for the terminal device, for example, configuration information for a timer and/or a counter for uplink congestion failure recovery, to support the terminal device in performing the uplink congestion failure recovery procedure based on the configuration information.

### 2. Bandwidth part (Bandwidth Part, BWP)

In 5G communications systems, a terminal device (for example, UE) may only support a relatively small operating bandwidth (for example, 5 megahertz (MHz)), while a cell on a network side can support a relatively large bandwidth (for example, 100 MHz). The small bandwidth part, on which the UE operates, of the large bandwidth is referred to as a BWP. From a perspective of UE configuration, for different UE functions, a BWP can be a BWP of one cell. A plurality of different BWPs use a same hybrid automatic repeat request (Hybrid Automatic Repeat Request, HARQ) entity.

Specifically, the network side (for example, a network device) may configure one or more BWPs for the UE, and may switch a currently activated BWP of the UE by using a BWP switching command (for example, physical downlink control channel (Physical Downlink Control Channel, PDCCH) indication information), that is, activating a new BWP and deactivating the currently activated BWP. Currently, the UE can activate only one BWP for one cell. BWP switching is a switching between a plurality of BWPs of a same cell.

In addition, the network side can configure a BWP inactivity timer (BWP-InactivityTimer) for an activated BWP. Further, in a case that the timer is started after the UE activates a BWP, the UE may switch, after the timer expires, the activated BWP to a default BWP (that is, default BWP) configured on the network side.

Additionally, the UE can autonomously switch a BWP in the following two cases:
(1) The UE triggers a random access procedure on the currently operating BWP, but no random access resource is available on the currently operating BWP, so the UE switches to an initial BWP (that is, initial BWP), and initiates the random access procedure on the initial BWP.
(2) A UE connection failure occurs on the currently operating BWP, so the UE switches to another BWP.

### The UE connection failure includes the following cases:

a. Handover failure. For example, BWP handover is not completed within a specified time (for example, timer t304 expiry);
b. Secondary cell group change (SCG change) failure. For example, an access by the UE to a new secondary cell group (Secondary Cell Group, SCG) is not completed within a specified time (for example, timer t307 expiry);
c. Radio link failure (Radio link failure, RLF); and
d. Uplink congestion failure, that is, listen before talk failures (LBT failure) continuously occur in uplink transmission of the UE.

The "radio link failure" includes at least one of the following:
(1) a physical layer out of synchronization (for example, timer t310 expiry);
(2) a media access control sublayer protocol (Media Access Control, MAC) layer random access failure, for example, the random access failure reaches a maximum number of random access attempts;
(3) an indication indicating that the maximum number of retransmissions at RLC layer is reached, for example, the maximum number of RLC layer retransmissions is reached; and
(4) a beam failure, for example, beam recovery procedure failure.

### 3. Dual connectivity (Dual Connectivity, DC)

When the UE operates in a DC mode, the UE may be configured with two cell groups, namely, a master cell group (Master Cell Group, MCG) and an SCG. The MCG includes at least a primary cell (Primary Cell, PCell), and may additionally include one or more secondary cells (Secondary Cell, SCell). The SCG includes at least a primary secondary cell (Primary Secondary Cell, PSCell), and may additionally include one or more SCells.

The configuration method provided in the embodiments of this disclosure may be applied to scenarios such as uplink congestion failure detection and/or uplink congestion failure recovery, and a specific usage scenario is not limited in the embodiments of this disclosure. Specifically, the configuration method may be applied to a process in which the network device configures (or reconfigures) configuration information for uplink congestion failure detection and/or configuration information for uplink congestion failure recovery for the terminal device.

In the embodiments of this disclosure, in a scenario in which the network device configures for the first time or reconfigures the configuration information for uplink congestion failure detection and/or the configuration information for uplink congestion failure recovery for the terminal device, the terminal device can determine, based on the corresponding configuration information, how to further execute the configuration information for uplink congestion failure detection and/or uplink congestion failure recovery. In this way, it is avoided that the terminal device does not know how to proceed further after obtaining the corresponding configuration information, which causes the terminal device unable to perform the uplink congestion failure detection or uplink congestion failure recovery in a timely manner.

The technical solutions provided in this application can be applied to various communications systems, such as a 5G communications system, a future evolved system, or a plurality of communication fusion systems. A plurality of application scenarios may be included, such as machine to machine (Machine to Machine, M2M), D2M, macro-micro communications, enhanced mobile broadband (enhance Mobile Broadband, eMBB), ultra reliable and low latency communications (ultra Reliable & Low Latency Communication, uRLLC), and massive machine type communications (Massive Machine Type Communication, mMTC). These scenarios include, but are not limited to, scenarios such as communication between terminal devices, communication between network devices, or communication between a network device and a terminal device. The embodiments of this disclosure may be applied to communication between a network device and a terminal device, or communication between terminal devices, or communication between network devices in a 5G communications system.

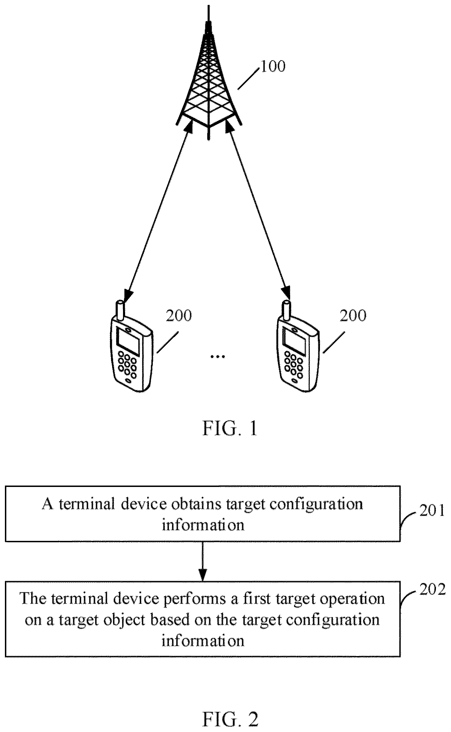

FIG. 1 is a possible schematic structural diagram of a communications system in an embodiment of this disclosure. As shown in FIG. 1, the communications system includes at least one network device 100 (only one is shown in FIG. 1) and one or more terminal devices 200 connected to each network device 100.

The network device 100 may be a base station, a core network device, a transmission and reception point (Transmission and Reception Point, TRP), a relay station, an access point, or the like. The network device 100 may be a base transceiver station (Base Transceiver Station, BTS) in a global system for mobile communications (Global System for Mobile communication, GSM) or code division multiple access (Code Division Multiple Access, CDMA) system, may be an NB (NodeB) in a wideband code division multiple access (Wideband Code Division Multiple Access, WCDMA) system, or may be an eNB or eNodeB (evolved NodeB) in LTE. The network device 100 may alternatively be a wireless controller in a cloud radio access network (Cloud Radio Access Network, CRAN) scenario. The network device 100 may alternatively be a network device in a 5G communications system or a network device in a future evolved network. However, the terms used do not constitute any limitation on this application.

The terminal device 200 may be a wireless terminal device or may be a wired terminal device. The wireless terminal device may be a device that provides voice and/or other service data connectivity to a user, a handheld device having a wireless communication function, a computing device or other processing devices connected to a wireless modem, an in-vehicle device, a wearable device, a terminal device in a future 5G network, or a terminal device in a future evolved PLMN network, or the like. The wireless terminal device may communicate with one or more core networks via a radio access network (Radio Access Network, RAN). The wireless terminal device may be a mobile terminal device such as a mobile phone (or referred to as "cellular" phone) and a computer having a mobile terminal device, such as a portable, pocket-sized, handheld, computer built-in, or in-vehicle mobile apparatus, which exchanges voice and/or data with the radio access network; or may be a device such as a personal communication service (Personal Communication Service, PCS) phone, a cordless phone, a session initiation protocol (Session Initiation Protocol, SIP) phone, a wireless local loop (Wireless Local Loop, WLL) station, or a personal digital assistant (Personal Digital Assistant, PDA). The wireless terminal device may also be a mobile device, UE, a UE terminal device, an access terminal device, a wireless communication device, a terminal device unit, a terminal device station, a mobile station (Mobile Station), a mobile (Mobile), a remote station (Remote Station), a remote site, a remote terminal device (Remote Terminal), a subscriber unit (Subscriber Unit), a subscriber station (Subscriber Station), a user agent (User Agent), a terminal device apparatus, or the like. In an example, in this embodiment of this disclosure, a terminal device shown in FIG. 1 is a mobile phone.

FIG. 2 is a schematic flowchart of a configuration method according to an embodiment of this disclosure. As shown in FIG. 2, the configuration method may include step 201 and step 202.

Step 201: A terminal device obtains target configuration information.

Optionally, the target configuration information may be configured by a network device for the terminal device. For example, the network device may generate the target configuration information, and transmit the target configuration information to the terminal device.

Optionally, the target configuration information may be transmitted to the terminal device based on a decision from the network device, or requested from the network device based on a decision from the terminal device (for example, the terminal device sends a request to the network device when an uplink transmission failure occurs).

It should be emphasized that the network device may transmit the target configuration information when establishing a connection with the terminal device (for example, establishing a wireless connection), or may transmit the target configuration information after the connection with the terminal device is established. In this way, the network device and the terminal device can maintain consistency of the target configuration information in real time.

Optionally, the target configuration information may include at least one of the following: configuration information for uplink congestion failure detection and configuration information for uplink congestion failure recovery.

Optionally, the configuration information for uplink congestion failure detection may include at least one of the following items that correspond to the uplink congestion detection: an uplink signal, an uplink channel, a frequency, a cell, timer (that is, a timer used for uplink congestion failure detection) information, and counter (that is, a counter used for uplink congestion failure detection) information. Specifically, the configuration information for uplink congestion failure detection includes at least one of timer information and counter information that correspond to the uplink congestion detection. Certainly, the configuration information for uplink congestion failure detection includes, but is not limited to, various information listed above, and may also include other information, which is not described in this embodiment of this application.

Optionally, after the terminal device obtains the configuration information for uplink congestion failure detection, an uplink signal transmitted by the terminal device may be an uplink signal in the configuration information for uplink congestion failure detection, an uplink channel carried by the uplink signal transmitted by the terminal device may be an uplink channel in the configuration information for uplink congestion failure detection, a frequency at which the terminal device transmits the uplink signal may be a frequency in the configuration information for uplink congestion failure detection, and a cell in which the terminal device transmits the uplink signal may be a cell in the configuration information for uplink congestion failure detection.

Optionally, the configuration information for uplink congestion failure recovery may include at least one of the following items that correspond to the uplink congestion recovery: an uplink signal, an uplink channel, a frequency, a cell, timer information, counter information, and the like. Specifically, the configuration information for uplink congestion failure recovery includes at least one of timer (that is, a timer used for uplink congestion failure recovery) information and counter (that is, a counter used for uplink congestion failure recovery) information that correspond to the uplink congestion recovery. Certainly, the configuration information for uplink congestion failure recovery includes, but is not limited to, various information listed above, and may also include other information, which is not described in this embodiment of this application.

Similarly, for a detailed description of the uplink signal, uplink channel, frequency, and cell in the configuration information for uplink congestion failure recovery, reference may be made to the above descriptions of the uplink signal, uplink channel, frequency, and cell in the configuration information for uplink congestion failure detection, and details are not described again in this embodiment of this disclosure.

Optionally, in a case that the target configuration information includes the configuration information for uplink congestion failure detection and the configuration information for uplink congestion failure recovery, a time sequence for the terminal device to obtain the configuration information for uplink congestion failure detection and the configuration information for uplink congestion failure recovery is not specifically limited, and may be any achievable time sequence. For example, the terminal device may first obtain the configuration information for uplink congestion failure detection, and then obtain the configuration information for uplink congestion failure recovery, so as to obtain the target configuration information.

Step 202: The terminal device performs a first target operation on a target object based on the target configuration information.

Optionally, the target object may include at least one of the following: a target timer and a target counter.

Optionally, in a case that the target object includes the target timer, the first target operation includes at least one of the following: starting the target timer, restarting the target timer, and stopping the target timer; and/or
in a case that the target object includes the target counter, the first target operation includes at least one of the following: updating a threshold of the target counter, and resetting the target counter.

Optionally, the step 202 may be implemented by performing the following step 1 to step 6.

Step 1: The terminal device starts the target timer in a case that the target object is the target timer and that the target configuration information is configured for the first time.

Step 2: The terminal device starts the target timer in a case that the target object is the target timer, that the target timer is not started, and that the target configuration information is reconfigured.

It can be understood that when the target configuration information is configured by a network device for the terminal device, the terminal device may start the target timer to start performing the uplink congestion failure detection and/or uplink congestion failure recovery.

Optionally, in a case that the target object is the target timer, the target configuration information may include a value of duration of the target timer, and the terminal device may update its duration to a corresponding duration in the target configuration information.

Step 3: The terminal device restarts or stops the target timer in a case that the target object is the target timer, that the target timer has already been started, and that the target configuration information is reconfigured.

Specifically, the terminal device may directly restart the target timer, or may first stop the target timer, and then restart the target timer after a period of time.

It can be understood that the terminal device restarts the target timer, so as to start performing the uplink congestion failure detection and/or uplink congestion failure recovery.

Step 4: The terminal device updates a threshold of the target counter in a case that the target object is the target counter and that the target configuration information is configured for the first time.

Step 5: The terminal device updates a threshold of the target counter in a case that the target object is the target counter and that the target configuration information is reconfigured.

It can be understood that the terminal device can control the target counter to continuously count, and update the threshold of the target counter.

Step 6: The terminal device resets the timer in a case that the target object is the target counter and that the target configuration information is reconfigured.

It can be understood that the terminal device resets the target counter and updates the threshold of the target counter, so as to start performing the uplink congestion failure detection and/or uplink congestion failure recovery.

### Example 1:

In Example 1 provided in an embodiment of this disclosure, the target configuration information is the configuration information for uplink congestion failure detection.

Specifically, the configuration method provided in this embodiment of this disclosure may be applied to a process in which the network device configures or reconfigures configuration information for uplink congestion failure detection for the terminal device, or a process in which the network device activates or deactivates the configuration information for uplink congestion failure detection for the terminal device.

The configuration information for uplink congestion failure detection includes an uplink signal, an uplink channel, a frequency, a cell, timer information, and counter information that correspond to the uplink congestion failure detection.

Optionally, in Example 1, the target timer is a first timer, the target counter is a first counter, and a threshold of the first counter is an uplink congestion failure detection threshold. To be specific, a target object includes at least one of the following: the first timer and the first counter, and both the first timer and the first counter are used for uplink congestion failure detection.

Duration of the first timer is a time length for the terminal device to perform uplink congestion failure detection (for example, a time length configured by a network device through the configuration information for uplink congestion failure detection, or a time length specified by a protocol), and the threshold of the first counter is an uplink congestion failure detection threshold currently configured by the network device.

Optionally, in Example 1, in a scenario in which the target object includes the first timer, the configuration information for uplink congestion failure detection may include information about the first timer, for example, the duration of the first timer.

Stopping the first timer means that the terminal device restores the timing value of the first timer to an initial value (for example, "0"), but does not start the first timer. Starting or restarting the first timer means that the terminal device restores the timing value of the first timer to an initial value (for example, "0"), and starts the first timer.

Optionally, in a case that the target object includes the first timer, the terminal device can start or restart the first timer through step 203, that is, step 202 can be implemented by performing step 203.

Step 203: The terminal device starts or restarts the first timer in a case that the terminal device meets a first condition.

The first condition includes at least one of the following condition 1 and condition 2.

Condition 1. An uplink signal is transmitted for the first time after the terminal device obtains the configuration information for uplink congestion failure detection.

Condition 2. An uplink signal transmission failure occurs for the first time after the terminal device obtains the configuration information for uplink congestion failure detection. For example, the terminal device experiences an uplink signal transmission failure for the first time due to LBT failure (that is, LBT failure).

Specifically, upon obtaining the configuration information for uplink congestion failure detection, the terminal device may determine which operation of the steps 1 to 3 is to be performed on the first timer.

Specifically, when the terminal device obtains the configuration information for uplink congestion failure detection, if the terminal device has not yet started to perform the uplink congestion failure detection (that is, the first timer is not started up), the terminal device starts the first timer; and if the terminal device has already started to perform the uplink congestion failure detection (that is, the first timer has already been started up), the terminal device restarts the first timer.

Optionally, the terminal device may first stop the first timer, and then restart the first timer.

It can be understood that when the terminal device obtains the configuration information for uplink congestion failure detection, if the terminal device does not meet the foregoing first condition, it indicates that the terminal device currently has a low probability of uplink congestion failure, meaning that the terminal device currently does not need to perform the uplink congestion failure detection. In this way, in a case that the terminal device currently has a low probability of uplink congestion failure, the terminal device can stop without starting the first timer, so that it does not start to perform the uplink congestion failure detection, thereby helping reduce operating resources of the terminal device.

Optionally, in Example 1, in a scenario in which the target object includes the first counter, the configuration information for uplink congestion failure detection may include information about the first counter, for example, an uplink congestion failure detection threshold of the first counter (that is, a threshold of the first counter).

For example, currently the terminal device sets a count value of the first counter to counter1=3, and the current threshold of the first counter is threshold 1 =4. In this case, in the scenario in which the configuration information for uplink congestion failure detection is obtained by the terminal device and an uplink congestion failure detection threshold of the first counter in the configuration information for uplink congestion failure detection is threshold 1 =6, the terminal device can make the first counter continue to count from the current counter1=3 through step 5, and modify the threshold of the first counter from the current threshold=4 to threshold 1 =6.

In step 6, resetting the first counter refers to resetting the count value of the first counter to an initial value (for example, "0"), and updating the threshold of the first counter.

For example, in Example 1, each time the terminal device detects an uplink congestion failure, the count value counter! of the first counter can be increased by 1. For example, currently the terminal device sets a count value of the first counter to counter1=3, and the current threshold of the first counter is threshold 1 =4. In this case, in the scenario in which the configuration information for uplink congestion failure detection is obtained by the terminal device and an uplink congestion failure detection threshold of the first counter in the configuration information for uplink congestion failure detection is threshold 1 =6, the terminal device can reset the count value of the first counter from the current counter1=3 to counter1=0 through step 6, and modify the threshold of the first counter from threshold 1 =4 to threshold 1 =6.

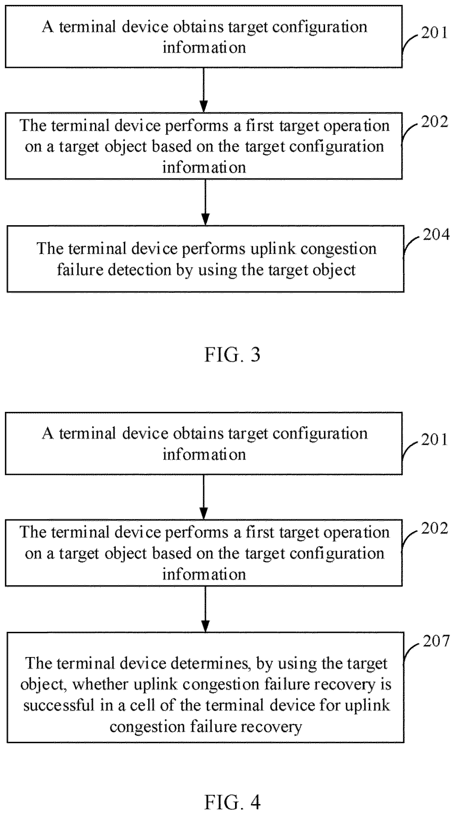

Further, in Example 1, with reference to FIG. 2, as shown in FIG. 3, a configuration method provided in an embodiment of this disclosure may further include step 204 after the step 202.

Step 204: The terminal device performs uplink congestion failure detection by using the target object.

Specifically, the terminal device may implement step 204 through step 204a or step 204b.

Step 204a: The terminal device performs uplink congestion failure detection by using the first counter.

In a case that the target object includes the first counter, if the count value of the first counter is greater than or equal to the uplink congestion failure detection threshold, it is determined that an uplink congestion failure has occurred. In this case, the terminal device may perform an operation related to an uplink congestion failure event, for example, starting to perform uplink congestion failure recovery, to allow the terminal device to successfully transmit uplink signals. On the contrary, if the count value of the first counter is less than the uplink congestion failure detection threshold of the first counter, it is determined that no uplink congestion failure occurs.

For example, when the threshold of the first counter is the uplink congestion failure detection threshold threshold 1 =6 currently configured by the network device, if the terminal device determines that the count value counter! of the first counter is greater than or equal to 6, it indicates that the terminal device has experienced an uplink congestion failure, and then the terminal device can perform a related operation for the uplink congestion failure.

Step 204b: The terminal device performs uplink congestion failure detection by using the first timer and the first counter.

Within the duration of the first timer, if the count value of the first counter is greater than or equal to the uplink congestion failure detection threshold of the first counter, it is determined that an uplink congestion failure has occurred; otherwise, within the duration of the first timer, if the count value of the first counter is less than the uplink congestion failure detection threshold, it is determined that no uplink congestion failure occurs.

For example, when the threshold of the first counter is the uplink congestion failure detection threshold threshold 1 =6 currently configured by the network device, if within the duration of the first timer, the terminal device determines that the count value counter1 of the first counter is greater than or equal to 6, it indicates that the terminal device has experienced an uplink congestion failure, and then the terminal device can perform a related operation for the uplink congestion failure, for example, performing uplink congestion failure recovery.

### Example 2:

In Example 2 provided in an embodiment of this disclosure, the target configuration information is the configuration information for uplink congestion failure recovery.

Specifically, the configuration method provided in this embodiment of this disclosure may be applied to a process in which the network device configures or reconfigures configuration information for uplink congestion failure recovery for the terminal device, or a process in which the network device activates or deactivates the configuration information for uplink congestion failure recovery for the terminal device.

The configuration information for uplink congestion failure recovery includes an uplink signal, an uplink channel, a frequency, a cell, a timer, a counter, and other information that correspond to the uplink congestion failure recovery.

Optionally, in Example 2, the target timer is a second timer, the target counter is a second counter, and a threshold of the second counter is an uplink congestion failure recovery threshold. To be specific, a target object includes at least one of the following: the second timer and the second counter, and both the second timer and the second counter are used for uplink congestion failure recovery.

Duration of the second timer is a time length in which the terminal device performs uplink congestion failure recovery (for example, a time length configured by a network device through the configuration information for uplink congestion failure recovery, or a time length specified by a protocol), and the threshold of the second counter is an uplink congestion failure recovery threshold currently configured by the network device.

Optionally, in a scenario in which the target timer is the second timer, the configuration information for uplink congestion failure recovery may include information about the second timer, for example, the duration of the second timer.

Stopping the second timer means that the terminal device restores the timing value of the second timer to an initial value (for example, "0"), but does not start the second timer. Starting or restarting the second timer means that the terminal device restores the timing value of the second timer to an initial value (for example, "0"), and starts the second timer.

Optionally, in a case that the target object is the second timer, the terminal device can start or restart the second timer through step 205, that is, step 202 can be implemented through step 205.

Step 205: The terminal device starts or restarts the second timer in a case that the terminal device meets a second condition.

The second condition includes at least one of the following condition 3 and condition 4.

Condition 3. An uplink congestion failure occurs after the terminal device obtains the configuration information for uplink congestion failure recovery.

For example, if the terminal device has experienced the uplink congestion failure on a currently activated BWP (denoted as BWP1), the terminal device starts or restarts the second timer. Later, after the terminal device switches to BWP2, if the terminal device performs the uplink congestion failure recovery, it is detected within the duration of the second timer, whether an uplink congestion failure has occurred in a cell of the terminal device for uplink congestion failure recovery, so that it can be determined whether the uplink congestion failure recovery is successful. For example, after the terminal device switches to BWP2, if the terminal device has experienced one uplink congestion failure within the duration of the second timer, the terminal device determines that the uplink congestion failure recovery fails.

Optionally, the BWP2 to which the terminal device switches may be a BWP in the configuration information for uplink congestion failure recovery, that is, a frequency corresponding to the uplink congestion failure recovery.

Condition 4. A frequency carrying an uplink signal is activated or changed to another frequency after the terminal device obtains the configuration information for uplink congestion failure recovery.

For example, the terminal device may start or restart the second timer when switching a currently activated BWP1 to BWP2 (or activating BWP2). In this way, the terminal device may determine that within the duration of the second timer, whether an uplink congestion failure has occurred in a cell of the terminal device for uplink congestion failure recovery, and then determine whether the uplink congestion failure recovery is successful.

Condition 5. A secondary cell (SCell) of the terminal device for uplink congestion failure recovery is activated after the terminal device obtains the configuration information for uplink congestion failure recovery.

Condition 6. A secondary cell of the terminal device for uplink congestion failure recovery is added after the terminal device obtains the configuration information for uplink congestion failure recovery.

Optionally, the foregoing secondary cell of the terminal device may be a secondary cell in the configuration information for uplink congestion failure recovery.

It can be understood that upon obtaining the configuration information for uplink congestion failure recovery, the terminal device may determine which operation of the steps 1 to 3 is to be performed on the second timer.

For example, when the terminal device obtains the configuration information for uplink congestion failure recovery, if the terminal device has not yet started to perform the uplink congestion failure recovery (that is, the second timer is not started up), the terminal device starts the second timer; and if the terminal device has already started to perform the uplink congestion failure recovery (that is, the second timer has already been started up), the terminal device restarts the second timer.

Optionally, in a case that the configuration information for uplink congestion failure recovery is reconfigured, the terminal device may first deactivate the second timer, and then restart the second timer after a period of time.

It can be understood that when the terminal device obtains the configuration information for uplink congestion failure recovery, if the terminal device does not meet the foregoing second condition, it indicates that the terminal device currently has a low probability of uplink congestion failure, meaning that the terminal device currently does not need to perform the uplink congestion failure recovery. In this way, in a case that the terminal device does not need to perform the uplink congestion failure recovery, the terminal device can stop the second timer, instead of starting the second timer, that is, does not start to perform the uplink congestion failure recovery, thereby helping reduce operating resources of the terminal device.

Optionally, in Example 2, in a scenario in which the target timer is the second counter, the configuration information for uplink congestion failure recovery may include information about the second counter, for example, an uplink congestion failure detection threshold of the second counter (that is, a threshold of the second counter).

In the step 4, updating the threshold of the second counter means that the terminal device controls the second counter to start counting, and updates the threshold of the second counter to the uplink congestion failure recovery threshold in the configuration information for uplink congestion failure recovery.

In the step 5, updating the threshold of the second counter means that the terminal device controls the second counter to keep counting, and updates the threshold of the second counter to the uplink congestion failure recovery threshold in the configuration information for uplink congestion failure recovery.

For example, currently the terminal device sets a count value of the second counter to counter2=2, and the current threshold of the second counter is threshold2=2. In this case, in the scenario in which the configuration information for uplink congestion failure recovery is obtained by the terminal device and an uplink congestion failure recovery threshold of the second counter in the configuration information for uplink congestion failure recovery is threshold2=3, the terminal device can make the second counter continue to count from the current counter2=2 through step 5, and modify the threshold of the second counter from the current threshold2=2 to threshold2=3.

In the step 6, resetting the second counter refers to resetting the count value of the second counter to an initial value (for example, "0").

For example, in a case that the terminal device performs the uplink congestion failure recovery, each time the terminal detects an uplink congestion failure event, the count value counter2 of the second counter can be increased by 1. For example, currently the terminal device sets a count value of the second counter to counter2=2, and the current threshold of the second counter is threshold2=2. In this case, in the scenario in which the configuration information for uplink congestion failure recovery is obtained by the terminal device and an uplink congestion failure recovery threshold of the second counter in the configuration information for uplink congestion failure recovery is threshold2=3, the terminal device can reset the count value of the second counter from counter2=2 to counter2=0 through the step 6, and modify the threshold of the second counter from threshold2=2 to threshold2=3.

Further, optionally, in a case that the target timer is the second timer, the terminal device can stop the second timer through step 206, that is, step 202 can be implemented by performing step 206.

Step 206: The terminal device stops the second timer in a case that the terminal device meets a third condition.

The third condition includes at least one of the following condition 7 to condition 9.

Condition 7. A frequency carrying an uplink signal is deactivated or changed to another frequency after the terminal device obtains the configuration information for uplink congestion failure recovery.

For example, after the terminal device activates a BWP (for example, BWP1) and starts the second timer, when the terminal device is performing the uplink congestion failure recovery, if the terminal device activates or changes to another BWP (for example, BWP3), the terminal device controls the second timer to stop timing.

Condition 8. A secondary cell of the terminal device for uplink congestion failure recovery is deactivated after the terminal device obtains the configuration information for uplink congestion failure recovery.

Condition 9. A secondary cell of the terminal device for uplink congestion failure recovery is removed after the terminal device obtains the configuration information for uplink congestion failure recovery.

Similarly, for descriptions of condition 8 and condition 9, reference may be made to related descriptions of condition 5 and condition 6 in the foregoing embodiment, and details are not described again in this embodiment of this disclosure.

Further, in Example 2, the configuration method provided in this embodiment of this disclosure may further include step 207 after the step 202 or the step 204. As shown in FIG. 4, after the step 202, the method may further include step 207.

Step 207: The terminal device determines, by using the target object, whether uplink congestion failure recovery is successful in a cell of the terminal device for uplink congestion failure recovery.

Specifically, the terminal device may implement step 207 through step 207a or step 207b.

Step 207a: The terminal device determines, by using the second counter, whether uplink congestion failure recovery is successful in a cell of the terminal device for uplink congestion failure recovery.

Specifically, in a case that the target object includes the second counter, if the count value of the second counter is greater than or equal to the uplink congestion failure recovery threshold, it is determined that the uplink congestion failure recovery has failed in the cell of the terminal device for uplink congestion failure recovery. In this case, the terminal device may handle the failure in uplink congestion failure recovery. On the contrary, if the count value of the second counter is less than the uplink congestion failure recovery threshold, it is determined that the uplink congestion failure recovery is successful in the cell of the terminal device for uplink congestion failure recovery.

For example, when the threshold of the second counter is the uplink congestion failure recovery threshold threshold2=3 currently configured by the network device, if the terminal device determines that the count value counter2 of the second counter is greater than or equal to 3, it indicates that the terminal device has failed in uplink congestion failure recovery, and then the terminal device can perform related processing for the failure in uplink congestion failure recovery.

Step 207b: The terminal device determines, by using the second timer and the second counter, whether uplink congestion failure recovery is successful in a cell of the terminal device for uplink congestion failure recovery.

Specifically, in a case that the target object includes the second counter and the second timer, within the duration of the second timer, if the count value of the second counter is greater than or equal to the uplink congestion failure recovery threshold, it is determined that the uplink congestion failure recovery has failed in the cell of the terminal device for uplink congestion failure recovery. On the contrary, within the duration of the second timer, if the count value of the second counter is less than the uplink congestion failure recovery threshold, it is determined that the uplink congestion failure recovery is successful in the cell of the terminal device for uplink congestion failure recovery.

For example, when the threshold of the second counter is the uplink congestion failure recovery threshold threshold2=3 currently configured by the network device, if the terminal device determines within the duration (for example, 10 seconds) of the second timer that the count value counter2 of the second counter is greater than or equal to 3, it indicates that the uplink congestion failure recovery has failed, and then related processing can be performed for the failure in uplink congestion failure recovery failure.

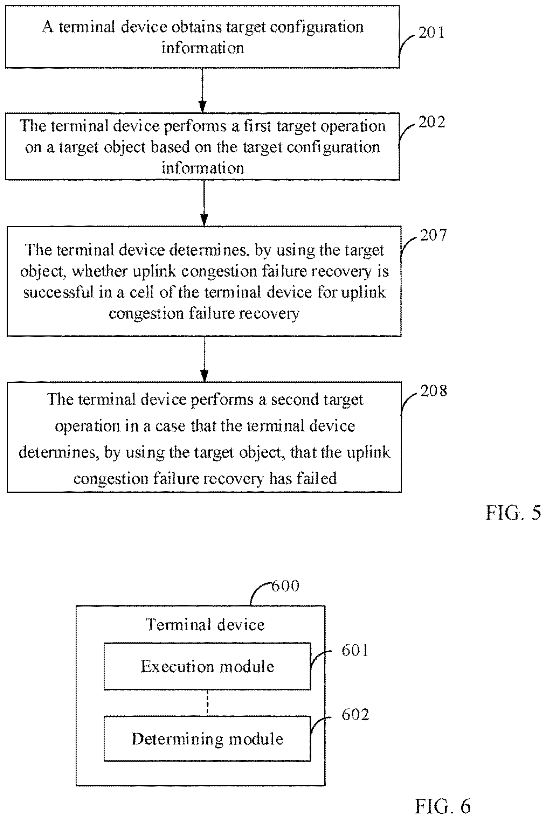

Further, with reference to FIG. 4, as shown in FIG. 5, a configuration method provided in an embodiment of this disclosure may further include step 208 after the step 207.

Step 208: The terminal device performs a second target operation in a case that the terminal device determines, by using the target object, that the uplink congestion failure recovery has failed.

The second target operation includes at least one of the following: a first operation and a second operation; the first operation is that the terminal device triggers a wireless connection re-establishment procedure; and the second operation is that the terminal device transmits failure information to the network device, where the failure information is used to indicate that the uplink congestion failure recovery has failed in a cell of the terminal device for uplink congestion failure recovery.

Specifically, the terminal device can distinguish types of cells in which the uplink congestion failure recovery is performed, and perform different second target operations for different types of cells. There may be four cases as far as the terminal device performs the second target operation:
(1) In a case that the uplink congestion failure recovery has failed in a primary cell of the terminal device, the second target operation includes at least one of the following: the first operation and the second operation. Specifically, the terminal device may transmit, to the network device, a failure message through a secondary cell in a master cell group, or a cell (for example, a primary secondary cell or a secondary cell) in a secondary cell group, to perform the second operation.
(2) In a case that the uplink congestion failure recovery has failed in all cells in a master cell group of the terminal device, the second target operation includes at least one of the following: the first operation and the second operation. Specifically, the terminal device may transmit, to the network device, a failure message through a cell (for example, a primary secondary cell or a secondary cell) in a secondary cell group, to perform the second operation.
(3) In a case that the uplink congestion failure recovery has failed in all cells in a secondary cell group of the terminal device, the second target operation is the second operation. Specifically, the terminal device may transmit a failure message, to the network device, through a cell (for example, a primary secondary cell or a secondary cell) in a secondary cell group, to perform the second operation.
(4) In a case that the uplink congestion failure recovery has failed in a primary secondary cell of the terminal device, the second target operation is the second operation. Specifically, the terminal device may transmit a failure message through a cell in a master cell group, or a secondary cell in a secondary cell group, to perform the second operation.

Optionally, in a case that the second target operation includes the first operation and the second operation, the time sequence for the terminal device to perform the first operation and the second operation is not specifically limited. For example, the terminal device may first perform the second operation, and then perform the first operation.

In the embodiments of this disclosure, because the terminal device can update in real time the configuration information for uplink congestion failure recovery configured by the network device for uplink congestion failure recovery, to ensure the consistency of the configuration information for uplink congestion failure recovery in the network device and the terminal device, the terminal device can control in real time, based on the configuration information for uplink congestion failure recovery, how many times and when to perform the uplink congestion failure recovery procedure, thereby preventing the terminal device from repeatedly transmitting an uplink congestion failure in a same cell. This further helps improve reliability of the uplink congestion failure recovery performed by the terminal device, and helps the terminal device to successfully transmit uplink signals.

Further, in this embodiment of this disclosure, for examples in which the target configuration information includes the configuration information for uplink congestion failure detection and the configuration information for uplink congestion failure recovery, reference may be made to related descriptions in Example 1 and Example 2 in the foregoing embodiments, and details are not described again in this embodiment of this disclosure.

It should be noted that in the configuration method provided in the embodiments of this disclosure, in a scenario in which the network device configures for the first time or reconfigures the configuration information for uplink congestion failure detection and/or the configuration information for uplink congestion failure recovery for the terminal device, the terminal device can determine, based on the corresponding configuration information, how to further execute the configuration information for uplink congestion failure detection and/or the uplink congestion failure recovery. In this way, it is avoided that the terminal device does not know how to proceed further after obtaining the corresponding configuration information, which causes the terminal device unable to perform the uplink congestion failure detection or uplink congestion failure recovery in a timely manner.

FIG. 6 is a possible schematic structural diagram of a terminal device provided for implementation of the embodiments of this disclosure. As shown in FIG. 6, the terminal device 600 includes an execution module 601. Specifically, the execution module 601 is configured to perform a first target operation on a target object based on target configuration information, where in a case that the target configuration information is configuration information for uplink congestion failure detection, the target object is used for uplink congestion failure detection; and/or in a case that the target configuration information is configuration information for uplink congestion failure recovery, the target object is used for uplink congestion failure recovery.

Optionally, the target object includes at least one of the following: a target timer and a target counter. In a case that the target object includes the target timer, the first target operation includes at least one of the following: starting the target timer, restarting the target timer, and stopping the target timer; and/or in a case that the target object includes the target counter, the first target operation includes at least one of the following: updating a threshold of the target counter, and resetting the target counter.

Optionally, the execution module is specifically configured to: start the target timer in a case that the target object is the target timer and that the target configuration information is configured for the first time; or
start the target timer in a case that the target object is the target timer, that the target timer is not started, and that the target configuration information is reconfigured; or
restart or stop the target timer in a case that the target object is the target timer, that the target timer has been started, and that the target configuration information is reconfigured; or
update a threshold of the target counter in a case that the target object is the target counter and that the target configuration information is configured for the first time; or
update a threshold of the target counter in a case that the target object is the target counter and that the target configuration information is reconfigured; or
reset the target counter in a case that the target object is the target counter and that the target configuration information is reconfigured.

Optionally, in a case that the target configuration information is the configuration information for uplink congestion failure detection, the target timer is a first timer, the target counter is a first counter, and a threshold of the first counter is an uplink congestion failure detection threshold.

Optionally, the target timer is the first timer, and the execution module 601 is specifically configured to start or restart the first timer in a case that the terminal device meets a first condition, where the first condition includes at least one of the following: an uplink signal is transmitted for the first time after the configuration information for uplink congestion failure detection is obtained; and an uplink signal transmission failure occurs for the first time after the configuration information for uplink congestion failure detection is obtained.

Optionally, in a case that the target configuration information is the configuration information for uplink congestion failure recovery, the target timer is a second timer, the target counter is a second counter, and a threshold of the second counter is an uplink congestion failure recovery threshold.

Optionally, the target timer is the second timer, and the execution module 601 is specifically configured to start or restart the second timer in a case that the terminal device meets a second condition, where the second condition includes at least one of the following: an uplink congestion failure occurs after the configuration information for uplink congestion failure recovery is obtained; a frequency carrying an uplink signal is activated or changed to another frequency after the configuration information for uplink congestion failure recovery is obtained; a secondary cell of the terminal device for uplink congestion failure recovery is activated after the configuration information for uplink congestion failure recovery is obtained; and a secondary cell of the terminal device for uplink congestion failure recovery is added after the configuration information for uplink congestion failure recovery is obtained.

Optionally, the execution module 601 is specifically configured to stop the second timer in a case that the terminal device meets a third condition, where the third condition includes at least one of the following: a frequency carrying an uplink signal is deactivated or changed to another frequency after the configuration information for uplink congestion failure recovery is obtained; a secondary cell of the terminal device for uplink congestion failure recovery is deactivated after the configuration information for uplink congestion failure recovery is obtained; and a secondary cell of the terminal device for uplink congestion failure recovery is removed after the configuration information for uplink congestion failure recovery is obtained.

Optionally, the terminal device 600 further includes a determining module 602, where the determining module 602 is configured to determine, by using the target object, whether uplink congestion failure recovery is successful in a cell of the terminal device for uplink congestion failure recovery.

Optionally, the determining module 602 is specifically configured to: in a case that the target object includes the second counter, if a count value of the second counter is greater than or equal to the uplink congestion failure recovery threshold, determine that the uplink congestion failure recovery has failed in the cell of the terminal device for uplink congestion failure recovery; and in a case that the target object includes the second counter and the second timer, within duration of the second timer, if the count value of the second counter is greater than or equal to the uplink congestion failure recovery threshold, determine that the uplink congestion failure recovery has failed in the cell of the terminal device for uplink congestion failure recovery.

Optionally, the execution module 601 is further configured to: in a case that the determining module 602 determines, by using the target object, that the uplink congestion failure recovery has failed in the cell of the terminal device for uplink congestion failure recovery, perform a second target operation, where the second target operation includes at least one of the following: a first operation and a second operation; the first operation is to trigger a wireless connection re-establishment procedure; and the second operation is to transmit failure information to the network device, where the failure information is used to indicate that the uplink congestion failure recovery has failed.

Optionally, in a case that the uplink congestion failure recovery has failed in a primary cell of the terminal device, the second target operation includes at least one of the following: the first operation and the second operation; or
in a case that the uplink congestion failure recovery has failed in all cells in a master cell group of the terminal device, the second target operation includes at least one of the following: the first operation and the second operation; or
in a case that the uplink congestion failure recovery has failed in all cells in a secondary cell group of the terminal device, the second target operation is the second operation; or
in a case that the uplink congestion failure recovery has failed in a primary secondary cell of the terminal device, the second target operation is the second operation; or
in a case that the uplink congestion failure recovery has failed in a secondary cell of the terminal device, the second target operation is the second operation.

The terminal device provided in this embodiment of this disclosure can implement the processes shown in any one of FIG. 2 to FIG. 5 in the foregoing method embodiments. To avoid repetition, details are not described herein again.

It should be noted that in the terminal device provided in this embodiment of this disclosure, in a scenario in which a network device configures for the first time or reconfigures the configuration information for uplink congestion failure detection and/or the configuration information for uplink congestion failure recovery for the terminal device, the terminal device can determine, based on the corresponding configuration information, how to further execute the configuration information for uplink congestion failure detection and/or the uplink congestion failure recovery. In this way, it is avoided that the terminal device does not know how to proceed further after obtaining the corresponding configuration information, which causes the terminal device unable to perform the uplink congestion failure detection or uplink congestion failure recovery in a timely manner.

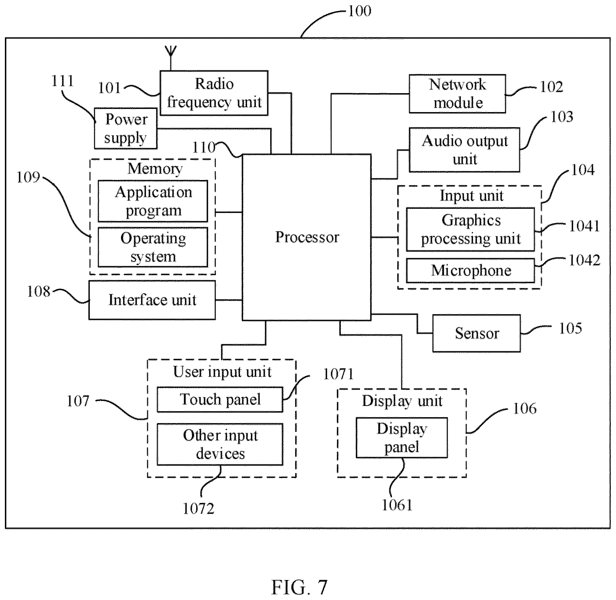

FIG. 7 is a schematic diagram of a hardware structure of a terminal device for implementing the embodiments of this application. The terminal device 100 includes but is not limited to components such as a radio frequency unit 101, a network module 102, an audio output unit 103, an input unit 104, a sensor 105, a display unit 106, a user input unit 107, an interface unit 108, a memory 109, a processor 110, and a power supply 111. A person skilled in the art can understand that the structure of the terminal device 100 shown in FIG. 7 does not constitute any limitation on the terminal device. The terminal device 100 may include more or fewer components than those shown in the figure, or a combination of some components, or the components disposed differently. In this embodiment of this disclosure, the terminal device 100 includes but is not limited to a mobile phone, a tablet computer, a laptop computer, a palmtop computer, an in-vehicle terminal device, a wearable device, a pedometer, and the like.

The processor 110 is configured to perform a first target operation on a target object based on target configuration information, where in a case that the target configuration information is configuration information for uplink congestion failure detection, the target object is used for uplink congestion failure detection; and in a case that the target configuration information is configuration information for uplink congestion failure recovery, the target object is used for uplink congestion failure recovery.

In the terminal device provided in this embodiment of this disclosure, in a scenario in which a network device configures for the first time or reconfigures the configuration information for uplink congestion failure detection and/or the configuration information for uplink congestion failure recovery for the terminal device, the terminal device can determine, based on the corresponding configuration information, how to further execute the configuration information for uplink congestion failure detection and/or the uplink congestion failure recovery. In this way, it is avoided that the terminal device does not know how to proceed further after obtaining the corresponding configuration information, which causes the terminal device unable to perform the uplink congestion failure detection or uplink congestion failure recovery in a timely manner.

It should be understood that, in this embodiment of this disclosure, the radio frequency unit 101 may be configured to transmit or receive a signal in an information transmitting/receiving or call process. Specifically, the radio frequency unit 101 receives downlink data from a base station and transmits the downlink data to the processor 110 for processing; and transmits uplink data to the base station. Typically, the radio frequency unit 101 includes but is not limited to an antenna, at least one amplifier, a transceiver, a coupler, a low noise amplifier, a duplexer, and the like. In addition, the radio frequency unit 101 may also communicate with a network and other devices via a wireless communications system.

The terminal device 100 provides the user with wireless broadband Internet access by using the network module 102, for example, helping the user send or receive an email , browse a web page, and access streaming media.

The audio output unit 103 may convert audio data received by the radio frequency unit 101 or the network module 102 or stored in the memory 109 into an audio signal and output the audio signal as a sound. In addition, the audio output unit 103 may further provide audio output (for example, a call signal received sound or a message received sound) related to a specific function performed by the terminal device 100. The audio output unit 103 includes a speaker, a buzzer, a telephone receiver, and the like.

The input unit 104 is configured to receive an audio or video signal. The input unit 104 may include a graphics processing unit (Graphics Processing Unit, GPU) 1041 and a microphone 1042, and the graphics processing unit 1041 processes image data of a still picture or a video obtained by an image capture apparatus (for example, a camera) in an image capture mode or a video capture mode. A processed image frame may be displayed on the display unit 106. An image frame processed by the graphics processing unit 1041 may be stored in the memory 109 (or another storage medium) or transmitted by the radio frequency unit 101 or the network module 102. The microphone 1042 can receive a sound and can process the sound into audio data. The processed audio data can be converted in a telephone call mode into a format that can be sent to a mobile communication base station through the radio frequency unit 101, for outputting.

The terminal device 100 further includes at least one sensor 105, for example, an optical sensor, a motion sensor, and other sensors. Specifically, the optical sensor may include an ambient light sensor and a proximity sensor. The ambient light sensor may adjust luminance of the display panel 1061 based on brightness of ambient light, and the proximity sensor may turn off the display panel 1061 and/or backlight when the terminal device 100 moves close to an ear. As a type of motion sensor, an accelerometer sensor can detect magnitudes of accelerations in all directions (usually three axes), can detect a magnitude and a direction of gravity when the terminal device is in a static state, and can be applied to terminal device posture recognition (such as screen switching between portrait and landscape, related games, and magnetometer posture calibration) of the terminal device, functions related to vibration recognition (such as pedometer and tapping), and the like. The sensor 105 may also include a fingerprint sensor, a pressure sensor, an iris sensor, a molecular sensor, a gyroscope, a barometer, a hygrometer, a thermometer, an infrared sensor, and the like. Details are not described herein.

The display unit 106 is configured to display information input by the user or information provided to the user. The display unit 106 may include the display panel 1061. The display panel 1061 may be configured in a form of a liquid crystal display (Liquid Crystal Display, LCD), an organic light-emitting diode (Organic Light-Emitting Diode, OLED), or the like.

The user input unit 107 may be configured to receive entered numerical or character information, and generate key signal input that is related to user setting and function control of the terminal device 100. Specifically, the user input unit 107 may include a touch panel 1071 and other input devices 1072. The touch panel 1071, also referred to as a touchscreen, may capture a touch operation performed by a user on or near the touch panel (for example, an operation performed by the user on the touch panel 1071 or near the touch panel 1071 by using any appropriate object or accessory such as a finger or a stylus). The touch panel 1071 may include two parts: a touch detection apparatus and a touch controller. The touch detection apparatus detects a touch position of the user, detects a signal brought by the touch operation, and transmits the signal to the touch controller. The touch controller receives touch information from the touch detection apparatus, converts the touch information into touch point coordinates, transmits the touch point coordinates to the processor 110, and receives and executes a command transmitted by the processor 110. In addition, the touch panel 1071 may be implemented in a plurality of forms, for example, as a resistive, capacitive, infrared, or surface acoustic wave touch panel. The user input unit 107 may further include other input devices 1072 in addition to the touch panel 1071. Specifically, the other input devices 1072 may include but are not limited to a physical keyboard, a function key (such as a volume control key or a switch key), a trackball, a mouse, and a joystick. Details are not described herein.

Further, the touch panel 1071 may cover the display panel 1061. When detecting a touch operation on or near the touch panel 1071, the touch panel 1071 transmits the touch operation to the processor 110 to determine a type of a touch event. Then, the processor 110 provides a corresponding visual output on the display panel 1061 based on the type of the touch event. Although in FIG. 7, the touch panel 1071 and the display panel 1061 act as two separate parts to implement input and output functions of the terminal device 100, in some embodiments, the touch panel 1071 and the display panel 1061 may be integrated to implement the input and output functions of the terminal device 100. This is not specifically limited herein.

The interface unit 108 is an interface for connecting an external apparatus to the terminal device 100. For example, the external apparatus may include a wired or wireless headphone port, an external power supply (or battery charger) port, a wired or wireless data port, a memory card port, a port for connecting an apparatus with an identification module, an audio input/output (I/O) port, a video I/O port, a headset port, or the like. The interface unit 108 may be configured to receive an input (for example, data information or power) from an external apparatus and transmit the received input to one or more elements within the terminal device 100, or may be configured to transmit data between the terminal device 100 and the external apparatus.

The memory 109 may be configured to store software programs and various data. The memory 109 may mainly include a program storage region and a data storage region. The program storage region may store an operating system, an application program required by at least one function (for example, an audio play function or an image play function), and the like. The data storage region may store data (for example, audio data and a phone book) created based on usage of the mobile phone. In addition, the memory 109 may include a high-speed random access memory, or may further include a nonvolatile memory, for example, at least one magnetic disk storage device or a flash memory device, or another volatile solid-state storage device.

The processor 110 is a control center of the terminal device 100, uses various interfaces and lines to connect all parts of the entire terminal device 100, and performs various functions and data processing of the terminal device 100 by running or executing the software program and/or module stored in the memory 109 and invoking data stored in the memory 109, thereby performing overall monitoring on the terminal device 100. The processor 110 may include one or more processing units. Optionally, an application processor and a modem processor may be integrated in the processor 110. The application processor primarily processes an operating system, user interfaces, application programs, and the like. The modem processor primarily processes radio communication. It can be understood that the modem processor may alternatively be not integrated in the processor 110.

The terminal device 100 may further include a power supply 111 (for example, a battery) that supplies power to each component. Optionally, the power supply 111 may be logically connected to the processor 110 by using a power management system, so as to implement functions such as charging management, discharging management, and power consumption management by using the power management system.

In addition, the terminal device 100 includes some functional modules that are not illustrated. Details are not described herein.

Optionally, an embodiment of this disclosure further provides a terminal device, including a processor, a memory, and a computer program stored in the memory and capable of running on the processor. When the computer program is executed by the processor, the processes of the configuration method in the foregoing embodiments are implemented, with the same technical effects achieved. To avoid repetition, details are not described again herein.

An embodiment of this disclosure further provides a computer-readable storage medium, where a computer program is stored in the computer-readable storage medium. When the computer program is executed by a processor, a plurality of processes of the configuration method in the foregoing embodiments are implemented, with the same technical effects achieved. To avoid repetition, details are not described again herein. The computer-readable storage medium includes a read-only memory (Read-Only Memory, ROM for short), a random access memory (Random Access Memory, RAM for short), a magnetic disk, an optical disc, or the like.

It should be noted that the terms "comprise", "include", or any of their variants in this specification are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the description of the foregoing implementations, persons skilled in the art can clearly understand that the method in the foregoing embodiments may be implemented by software in addition to a necessary universal hardware platform or by hardware only. In most cases, the former is a preferred implementation. Based on such an understanding, the technical solutions of this application essentially or the part contributing to the prior art may be implemented in a form of a software product. The software product may be stored in a storage medium (for example, a ROM/RAM, a magnetic disk, or an optical disc), and includes several instructions for instructing a terminal device (which may be a mobile phone, a computer, a server, an air conditioner, a network device, or the like) to perform the method described in the plurality of embodiments of this application.

The foregoing describes the embodiments of this application with reference to the accompanying drawings.

## Claims

1. A configuration method, performed by a terminal device, the method comprises:
performing (202) a first target operation on a target object based on target configuration information, wherein
in a case that the target configuration information is configuration information for uplink congestion failure detection, the target object is used for uplink congestion failure detection; and/or
in a case that the target configuration information is configuration information for uplink congestion failure recovery, the target object is used for uplink congestion failure recovery;
wherein the performing (202) the first target operation on the target object is **characterised by**:
resetting, in a case that the target object is a target counter and that the target configuration information is reconfigured, the target counter, wherein in a case that the target object is used for uplink congestion failure detection, a threshold of the target counter is a threshold for uplink congestion failure detection, or in a case that the target object is used for uplink congestion failure recovery, a threshold of the target counter is a threshold for uplink congestion failure recovery;
or
starting or restarting, in a case that the target object is a first timer and that an uplink signal transmission failure occurs for the first time after the configuration information for uplink congestion failure detection is obtained, the first timer, wherein the first timer is used for uplink congestion failure detection;
or
starting or restarting, in a case that the target object is a second timer and a second condition is met, the second timer, wherein the second timer is used for uplink congestion failure recovery, and the second condition comprises at least one of the following: an uplink congestion failure occurs after the configuration information for uplink congestion failure recovery is obtained; a frequency carrying an uplink signal is activated or changed to another frequency after the configuration information for uplink congestion failure recovery is obtained; a secondary cell of the terminal device for uplink congestion failure recovery is activated after the configuration information for uplink congestion failure recovery is obtained; and a secondary cell of the terminal device for uplink congestion failure recovery is added after the configuration information for uplink congestion failure recovery is obtained.

2. The method according to claim 1, wherein the target object comprises at least one of the following: a target timer and the target counter, and the target timer comprises at least one of the first timer or the second timer, wherein
in a case that the target object comprises the target timer, the first target operation comprises at least one of the following: starting the target timer, restarting the target timer, and stopping the target timer; and/or
in a case that the target object comprises the target counter, the first target operation comprises at least one of the following: updating a threshold of the target counter, and resetting the target counter.

3. The method according to claim 2, wherein the performing (202) a first target operation on a target object based on target configuration information comprises:
starting the target timer in a case that the target object is the target timer and that the target configuration information is configured for the first time; or
starting the target timer in a case that the target object is the target timer, that the target timer is not started, and that the target configuration information is reconfigured; or
restarting or stopping the target timer in a case that the target object is the target timer, that the target timer has been started, and that the target configuration information is reconfigured; or
updating a threshold of the target counter in a case that the target object is the target counter and that the target configuration information is configured for the first time; or
updating a threshold of the target counter in a case that the target object is the target counter and that the target configuration information is reconfigured.

4. The method according to claim 1, wherein the configuration information for uplink congestion failure detection comprises at least one of the following:
information on a timer used for uplink congestion failure detection, or information on a counter used for uplink congestion failure detection; or
wherein the configuration information for uplink congestion failure recovery comprises at least one of the following: information on a timer used for uplink congestion failure recovery, or information on a counter used for uplink congestion failure recovery.

5. The method according to claim 4, wherein in a case that the target timer is the first timer, the performing (202) the first target operation on the target object comprises:
starting or restarting the first timer in a case that an uplink signal is transmitted for the first time after the configuration information for uplink congestion failure detection is obtained.

6. The method according to claim 3, wherein the stopping the second timer comprises:
stopping the second timer in a case that the terminal device meets a third condition, wherein
the third condition comprises at least one of the following: a frequency carrying an uplink signal is deactivated or changed to another frequency after the configuration information for uplink congestion failure recovery is obtained; a secondary cell of the terminal device for uplink congestion failure recovery is deactivated after the configuration information for uplink congestion failure recovery is obtained; and a secondary cell of the terminal device for uplink congestion failure recovery is removed after the configuration information for uplink congestion failure recovery is obtained.

7. The method according to claim 1 or 6, wherein the method further comprises:
determining, by using the target object, whether uplink congestion failure recovery is successful in a cell of the terminal device for uplink congestion failure recovery.

8. The method according to claim 7, wherein the determining, by using the target object, whether uplink congestion failure recovery is successful in a cell of the terminal device for uplink congestion failure recovery comprises:
in a case that the target object comprises the target counter, if a count value of the target counter is greater than or equal to the threshold for uplink congestion failure recovery, determining that the uplink congestion failure recovery has failed in the cell of the terminal device for uplink congestion failure recovery; and
in a case that the target object comprises the second counter and the second timer, within duration of the second timer, if a count value of the second counter is greater than or equal to the threshold for uplink congestion failure recovery, determining that the uplink congestion failure recovery has failed in the cell of the terminal device for uplink congestion failure recovery.

9. The method according to claim 8, wherein after the determining, by using the target object, whether uplink congestion failure recovery is successful in a cell of the terminal device for uplink congestion failure recovery, the method further comprises:
performing a second target operation in a case that it is determined, by using the target object, that the uplink congestion failure recovery has failed in the cell of the terminal device for uplink congestion failure recovery, wherein
the second target operation comprises at least one of the following: a first operation and a second operation;
the first operation is to trigger a wireless connection re-establishment procedure; and
the second operation is to transmit failure information to a network device, wherein the failure information is used to indicate that the uplink congestion failure recovery has failed in the cell of the terminal device for uplink congestion failure recovery.

10. The method according to claim 9, wherein
in a case that the uplink congestion failure recovery has failed in a primary cell of the terminal device, the second target operation comprises at least one of the following: the first operation and the second operation; or
in a case that the uplink congestion failure recovery has failed in all cells in a master cell group of the terminal device, the second target operation comprises at least one of the following: the first operation and the second operation; or
in a case that the uplink congestion failure recovery has failed in all cells in a secondary cell group of the terminal device, the second target operation is the second operation; or
in a case that the uplink congestion failure recovery has failed in a primary secondary cell of the terminal device, the second target operation is the second operation; or
in a case that the uplink congestion failure recovery has failed in a secondary cell of the terminal device, the second target operation is the second operation.

11. A terminal device, wherein the terminal device comprises an execution module (601),
the execution module (601) is configured to perform a first target operation on a target object based on target configuration information, wherein
in a case that the target configuration information is configuration information for uplink congestion failure detection, the target object is used for uplink congestion failure detection; and/or
in a case that the target configuration information is configuration information for uplink congestion failure recovery, the target object is used for uplink congestion failure recovery;
the execution module (601) is **characterised by**:
reset, in a case that the target object is a target counter and that the target configuration information is reconfigured, the target counter, wherein in a case that the target object is used for uplink congestion failure detection, a threshold of the target counter is a threshold for uplink congestion failure detection, or in a case that the target object is used for uplink congestion failure recovery, a threshold of the target counter is a threshold for uplink congestion failure recovery;
or
start or restart, in a case that the target object is a first timer and that an uplink signal transmission failure occurs for the first time after the configuration information for uplink congestion failure detection is obtained, the first timer, wherein the first timer is used for uplink congestion failure detection;
or
start or restart, in a case that the target object is a second timer and a second condition is met, the second timer, wherein the second timer is used for uplink congestion failure recovery, and the second condition comprises at least one of the following: an uplink congestion failure occurs after the configuration information for uplink congestion failure recovery is obtained; a frequency carrying an uplink signal is activated or changed to another frequency after the configuration information for uplink congestion failure recovery is obtained; a secondary cell of the terminal device (600) for uplink congestion failure recovery is activated after the configuration information for uplink congestion failure recovery is obtained; and a secondary cell of the terminal device (600) for uplink congestion failure recovery is added after the configuration information for uplink congestion failure recovery is obtained.

12. The terminal device according to claim 11, wherein the target object comprises at least one of the following: a target timer and the target counter, and the target timer comprises at least one of the first timer or the second timer, wherein
in a case that the target object comprises the target timer, the first target operation comprises at least one of the following: starting the target timer, restarting the target timer, and stopping the target timer; and/or
in a case that the target object comprises the target counter, the first target operation comprises at least one of the following: updating a threshold of the target counter, and resetting the target counter.

13. The terminal device according to claim 12, wherein
the execution module (601) is specifically configured to: start the target timer in a case that the target object is the target timer and that the target configuration information is configured for the first time; or
start the target timer in a case that the target object is the target timer, that the target timer is not started, and that the target configuration information is reconfigured; or
restart or stop the target timer in a case that the target object is the target timer, that the target timer has been started, and that the target configuration information is reconfigured; or
update a threshold of the target counter in a case that the target object is the target counter and that the target configuration information is configured for the first time; or
update a threshold of the target counter in a case that the target object is the target counter and that the target configuration information is reconfigured.

14. The terminal device according to claim 13, wherein the configuration information for uplink congestion failure detection comprises at least one of the following: information on a timer used for uplink congestion failure detection, or information on a counter used for uplink congestion failure detection; or
wherein the configuration information for uplink congestion failure recovery comprises at least one of the following: information on a timer used for uplink congestion failure recovery, or information on a counter used for uplink congestion failure recovery.

15. The terminal device according to claim 11, wherein the target timer is the first timer; and
the execution module (601) is specifically configured to start or restart the first timer in a case that an uplink signal is transmitted for the first time after the configuration information for uplink congestion failure detection is obtained.

## Patentansprüche

1. Konfigurationsverfahren, das von einem Endgerät durchgeführt wird, wobei das Verfahren den folgenden Schritt umfasst:
Durchführen (202) einer ersten Zieloperation an einem Zielobjekt basierend auf Zielkonfigurationsinformationen, wobei
in einem Fall, dass die Zielkonfigurationsinformationen Konfigurationsinformationen für eine Erkennung von Uplink-Engpass-Fehlern sind, das Zielobjekt für die Erkennung von Uplink-Engpass-Fehlern verwendet wird; und/oder
in einem Fall, dass die Zielkonfigurationsinformationen Konfigurationsinformationen für eine Wiederherstellung bei Uplink-Engpass-Fehlern sind, das Zielobjekt für die Wiederherstellung bei Uplink-Engpass-Fehlern verwendet wird;
wobei das Durchführen (202) der ersten Zieloperation an dem Zielobjekt durch die folgenden Schritte gekennzeichnet ist:
Zurücksetzen des Zielzählers, in einem Fall, dass das Zielobjekt ein Zielzähler ist und dass die Zielkonfigurationsinformationen neu konfiguriert werden, wobei in einem Fall, dass das Zielobjekt für die Erkennung von Uplink-Engpass-Fehlern verwendet wird, ein Schwellenwert des Zielzählers ein Schwellenwert für die Erkennung von Uplink-Engpass-Fehlern ist, oder in einem Fall, dass das Zielobjekt für die Wiederherstellung bei Uplink-Engpass-Fehlern verwendet wird, ein Schwellenwert des Zielzählers ein Schwellenwert für die Wiederherstellung bei Uplink-Engpass-Fehlern ist;
oder
Starten oder Neustarten, in einem Fall, dass das Zielobjekt ein erster Zeitgeber ist und ein Uplink-Signalübertragungsfehler zum ersten Mal auftritt, nachdem die Konfigurationsinformationen für die Erkennung von Uplink-Engpass-Fehlern erhalten wurden, des ersten Zeitgebers, wobei der erste Zeitgeber für die Erkennung von Uplink-Engpass-Fehlern verwendet wird;
oder
Starten oder Neustarten, in einem Fall, dass das Zielobjekt ein zweiter Zeitgeber ist und eine zweite Bedingung erfüllt ist, des zweiten Zeitgebers, wobei der zweite Zeitgeber für die Wiederherstellung bei Uplink-Engpass-Fehlern verwendet wird und die zweite Bedingung aufweist: ein Uplink-Engpass-Fehler tritt auf, nachdem die Konfigurationsinformationen für die Wiederstellung bei Uplink-Engpass-Fehlern erhalten wurden; und/oder eine Frequenz, die ein Uplink-Signal trägt, aktiviert oder auf eine andere Frequenz geändert wird, nachdem die Konfigurationsinformationen für die Wiederherstellung bei Uplink-Engpass-Fehlern erhalten wurden; und/oder eine sekundäre Zelle des Endgeräts für die Wiederherstellung bei Uplink-Engpass-Fehlern aktiviert wird, nachdem die Konfigurationsinformationen für die Wiederherstellung bei Uplink-Engpass-Fehlern erhalten wurden; und/oder eine sekundäre Zelle des Endgeräts für die Wiederherstellung bei Uplink-Engpass-Fehlern hinzugefügt wird, nachdem die Konfigurationsinformationen für die Wiederherstellung bei Uplink-Engpass-Fehlern erhalten wurden.

2. Konfigurationsverfahren nach Anspruch 1, wobei das Zielobjekt einen Zielzeitgeber und/oder den Zielzähler aufweist, wobei der Zielzeitgeber den ersten Zeitgeber und/oder den zweiten Zeitgeber aufweist, wobei
in einem Fall, dass das Zielobjekt den Zielzeitgeber aufweist, die erste Zieloperation die folgenden Schritte umfasst: Starten des Zielzeitgebers, und/oder Neustarten des Zielzeitgebers und/oder Stoppen des Zielzeitgebers; und/oder
in einem Fall, dass das Zielobjekt den Zielzähler aufweist, die erste Zieloperation die folgenden Schritte umfasst: Aktualisieren eines Schwellenwerts des Zielzählers, und/oder Zurücksetzen des Zielzählers.

3. Verfahren nach Anspruch 2, wobei das Durchführen (202) einer ersten Zieloperation an einem Zielobjekt basierend auf Zielkonfigurationsinformationen die folgenden Schritte umfasst:
Starten des Zielzeitgebers in einem Fall, dass das Zielobjekt der Zielzeitgeber ist und dass die Zielkonfigurationsinformationen zum ersten Mal konfiguriert sind; oder
Starten des Zielzeitgebers in einem Fall, dass das Zielobjekt der Zielzeitgeber ist, dass der Zielzeitgeber nicht gestartet wird und dass die Zielkonfigurationsinformationen neu konfiguriert werden; oder
Neustarten oder Stoppen des Zielzeitgebers in einem Fall, dass das Zielobjekt der Zielzeitgeber ist, dass der Zielzeitgeber gestartet wurde und dass die Zielkonfigurationsinformationen neu konfiguriert werden; oder
Aktualisieren eines Schwellenwerts des Zielzählers in einem Fall, dass das Zielobjekt der Zielzähler ist und die Zielkonfigurationsinformationen zum ersten Mal konfiguriert werden; oder
Aktualisieren eines Schwellenwerts des Zielzählers in einem Fall, dass das Zielobjekt der Zielzähler ist und die Zielkonfigurationsinformationen neu konfiguriert werden.

4. Konfigurationsverfahren nach Anspruch 1, wobei die Konfigurationsinformationen für die Erkennung von Uplink-Engpass-Fehlern Informationen über einen Zeitgeber, der für die Erkennung von Uplink-Engpass-Fehlern verwendet wird, und/oder Informationen über einen Zähler aufweisen, der für die Erkennung von Uplink-Engpass-Fehlern verwendet wird; oder
wobei die Konfigurationsinformationen für die Wiederherstellung bei Uplink-Engpass-Fehlern Informationen über einen Zeitgeber, der für die Wiederherstellung bei Uplink-Engpass-Fehlern verwendet wird, und/oder Informationen über einen Zähler aufweisen, der für die Wiederherstellung bei Uplink-Engpass-Fehlern verwendet wird.

5. Konfigurationsverfahren nach Anspruch 4, wobei in einem Fall, dass der Zielzeitgeber der erste Zeitgeber ist, das Durchführen (202) der ersten Zieloperation auf dem Zielobjekt den folgenden Schritt umfasst:
Starten oder Neustarten des ersten Zeitgebers in einem Fall, dass ein Uplink-Signal zum ersten Mal übertragen wird, nachdem die Konfigurationsinformationen für die Erkennung von Uplink-Engpass-Fehlern erhalten wurden.

6. Konfigurationsverfahren nach Anspruch 3, wobei das Stoppen des zweiten Zeitgebers den folgenden Schritt umfasst:
Stoppen des zweiten Zeitgebers in einem Fall, dass das Endgerät eine dritte Bedingung erfüllt, wobei
die dritte Bedingung aufweist: eine Frequenz, die ein Uplink-Signal trägt, deaktiviert oder auf eine andere Frequenz geändert wird, nachdem die Konfigurationsinformationen für die Wiederherstellung bei Uplink-Engpass-Fehlern erhalten wurden; und/oder eine sekundäre Zelle des Endgeräts für die Wiederherstellung bei Uplink-Engpass-Fehlern deaktiviert wird, nachdem die Konfigurationsinformationen für die Wiederherstellung bei Uplink-Engpass-Fehlern erhalten wurden; und/oder eine sekundäre Zelle des Endgeräts für die Wiederherstellung bei Uplink-Engpass-Fehlern entfernt wird, nachdem die Konfigurationsinformationen für die Wiederherstellung bei Uplink-Engpass-Fehlern erhalten wurden.

7. Konfigurationsverfahren nach Anspruch 1 oder 6, wobei das Verfahren ferner den folgenden Schritt umfasst:
Bestimmen, unter Verwendung des Zielobjekts, ob die Wiederherstellung bei Uplink-Engpass-Fehlern in einer Zelle des Endgeräts für die Wiederherstellung bei Uplink-Engpass-Fehlern erfolgreich ist.

8. Verfahren nach Anspruch 7, wobei das Bestimmen, unter Verwendung des Zielobjekts, ob die Wiederherstellung bei Uplink-Engpass-Fehlern in einer Zelle des Endgeräts für die Wiederherstellung bei Uplink-Engpass-Fehlern erfolgreich ist, die folgenden Schritte umfasst:
in einem Fall, dass das Zielobjekt den Zielzähler aufweist, wenn ein Zählwert des Zielzählers größer oder gleich dem Schwellenwert für die Wiederherstellung bei Uplink-Engpass-Fehlern ist, Bestimmen, dass die Wiederherstellung bei Uplink-Engpass-Fehlern in der Zelle des Endgeräts für die Wiederherstellung bei Uplink-Engpass-Fehlern fehlgeschlagen ist; und
in einem Fall, dass das Zielobjekt den zweiten Zähler und den zweiten Zeitgeber aufweist, innerhalb der Dauer des zweiten Zeitgebers, wenn ein Zählwert des zweiten Zählers größer oder gleich dem Schwellenwert für die Wiederherstellung bei Uplink-Engpass-Fehlern ist, Bestimmen, dass die Wiederherstellung bei Uplink-Engpass-Fehlern in der Zelle des Endgeräts für die Wiederherstellung bei Uplink-Engpass-Fehlern fehlgeschlagen ist.

9. Verfahren nach Anspruch 8, wobei nach dem Bestimmen, unter Verwendung des Zielobjekts, ob die Wiederherstellung bei Uplink-Engpass-Fehern in einer Zelle des Endgeräts für die Wiederherstellung bei Uplink-Engpass-Fehern erfolgreich ist, das Verfahren ferner den folgenden Schritt umfasst:
Durchführen einer zweiten Zieloperation in einem Fall, dass unter Verwendung des Zielobjekts bestimmt wird, dass die Wiederherstellung bei Uplink-Engpass-Fehern in der Zelle des Endgeräts für die Wiederherstellung bei Uplink-Engpass-Fehern fehlgeschlagen ist, wobei
die zweite Zieloperation eine erste Operation und/oder eine zweite Operation aufweist;
die erste Operation ein Auslösen eines Verfahrens zur Wiederherstellung einer drahtlosen Verbindung ist; und
die zweite Operation ein Übertragen von Fehlerinformationen an ein Netzwerkgerät ist, wobei die Fehlerinformationen verwendet werden, um anzuzeigen, dass die Wiederherstellung bei Uplink-Engpass-Fehlern in der Zelle des Endgeräts für die Wiederherstellung bei Uplink-Engpass-Fehlern fehlgeschlagen ist.

10. Konfigurationsverfahren nach Anspruch 9, wobei
in einem Fall, dass die Wiederherstellung bei Uplink-Engpass-Fehlern in einer Primärzelle des Endgeräts fehlgeschlagen ist, die zweite Zieloperation die erste Operation und/oder die zweite Operation aufweist; oder
in einem Fall, dass die Wiederherstellung bei Uplink-Engpass-Fehlern in allen Zellen in einer Hauptzellengruppe des Endgeräts fehlgeschlagen ist, die zweite Zieloperation Folgendes die erste Operation und/oder die zweite Operation aufweist; oder
in einem Fall, dass die Wiederherstellung bei Uplink-Engpass-Fehlern in allen Zellen in einer sekundären Zellengruppe des Endgeräts fehlgeschlagen ist, die zweite Zieloperation die zweite Operation ist; oder
in einem Fall, dass die Wiederherstellung bei Uplink-Engpass-Fehlern in einer primären sekundären Zelle des Endgeräts fehlgeschlagen ist, die zweite Zieloperation die zweite Operation ist; oder
in einem Fall, dass die Wiederherstellung bei Uplink-Engpass-Fehlern in einer sekundären Zelle des Endgeräts fehlgeschlagen ist, die zweite Zieloperation die zweite Operation ist.

11. Endgerät, wobei das Endgerät ein Ausführungsmodul (601) aufweist, wobei
das Ausführungsmodul (601) konfiguriert ist, um eine erste Zieloperation an einem Zielobjekt basierend auf Zielkonfigurationsinformationen durchzuführen, wobei
in einem Fall, dass die Zielkonfigurationsinformationen Konfigurationsinformationen für die Erkennung von Uplink-Engpass-Fehlern sind, das Zielobjekt für die Erkennung von Uplink-Engpass-Fehlern verwendet wird; und/oder
in einem Fall, dass die Zielkonfigurationsinformationen Konfigurationsinformationen für die Wiederherstellung bei Uplink-Engpass-Fehlern sind, das Zielobjekt für die Wiederherstellung von Uplink-Engpass-Fehlern verwendet wird;
das Ausführungsmodul (601) durch die folgenden Schritte gekennzeichnet ist:
Zurücksetzen, in einem Fall, dass das Zielobjekt ein Zielzähler ist und dass die Zielkonfigurationsinformationen neu konfiguriert werden, des Zielzählers, wobei in einem Fall, dass das Zielobjekt für die Erkennung von Uplink-Engpass-Fehlern verwendet wird, ein Schwellenwert des Zielzählers ein Schwellenwert für die Erkennung von Uplink-Engpass-Fehlern ist, oder in einem Fall, dass das Zielobjekt für die Wiederherstellung bei Uplink-Engpass-Fehlern verwendet wird, ein Schwellenwert des Zielzählers ein Schwellenwert für die Wiederherstellung bei Uplink-Engpass-Fehlern ist;
oder
Starten oder Neustarten des ersten Zeitgebers in einem Fall, dass das Zielobjekt ein erster Zeitgeber ist und ein Uplink-Signalübertragungsfehler zum ersten Mal auftritt, nachdem die Konfigurationsinformationen für die Erkennung von Uplink-Engpass-Fehlern erhalten wurden, wobei der erste Zeitgeber für Erkennung von Uplink-Engpass-Fehlern verwendet wird;
oder
Starten oder Neustarten des zweiten Zeitgebers in einem Fall, dass das Zielobjekt ein zweiter Zeitgeber ist und eine zweite Bedingung erfüllt ist, wobei der zweite Zeitgeber für die Wiederherstellung bei Uplink-Engpass-Fehlern verwendet wird und die zweite Bedingung aufweist: ein Uplink-Engpass-Fehler tritt auf, nachdem die Konfigurationsinformationen für die Wiederherstellung Uplink-Engpass-Fehlern erhalten wurden; und/oder eine Frequenz, die ein Uplink-Signal trägt, aktiviert oder auf eine andere Frequenz geändert wird, nachdem die Konfigurationsinformationen für die Wiederherstellung bei Uplink-Engpass-Fehlern erhalten wurden; und/oder eine sekundäre Zelle des Endgeräts (600) für die Wiederherstellung bei Uplink-Engpass-Fehlern aktiviert wird, nachdem die Konfigurationsinformationen für die Wiederherstellung bei Uplink-Engpass-Fehlern erhalten wurden; und/oder eine sekundäre Zelle des Endgeräts (600) für die Wiederherstellung bei Uplink-Engpass-Fehlern hinzugefügt wird, nachdem die Konfigurationsinformationen für die Wiederherstellung bei Uplink-Engpass-Fehlern erhalten wurden.

12. Endgerät nach Anspruch 11, wobei das Zielobjekt einen Zielzeitgeber und/oder den Zielzähler aufweist, wobei der Zielzeitgeber den ersten Zeitgeber und/oder den zweiten Zeitgeber aufweist, wobei
in einem Fall, dass das Zielobjekt den Zielzeitgeber aufweist, die erste Zieloperation die folgenden Schritte umfasst: Starten des Zielzeitgebers, und/oder Neustarten des Zielzeitgebers und/oder Stoppen des Zielzeitgebers; und/oder
in einem Fall, dass das Zielobjekt den Zielzähler aufweist, die erste Zieloperation die folgenden Schritte umfasst: Aktualisieren eines Schwellenwerts des Zielzählers, und/oder Zurücksetzen des Zielzählers.

13. Endgerät nach Anspruch 12, wobei
das Ausführungsmodul (601) speziell konfiguriert ist, um: den Zielzeitgeber in einem Fall zu starten, dass das Zielobjekt der Zielzeitgeber ist und dass die Zielkonfigurationsinformationen zum ersten Mal konfiguriert werden; oder
den Zielzeitgeber in einem Fall zu starten, dass das Zielobjekt der Zielzeitgeber ist, der Zielzeitgeber nicht gestartet wird und die Zielkonfigurationsinformationen neu konfiguriert werden; oder
den Zielzeitgeber in einem Fall neu zu starten oder zu stoppen, dass das Zielobjekt der Zielzeitgeber ist, der Zielzeitgeber gestartet wurde und die Zielkonfigurationsinformationen neu konfiguriert sind; oder
einen Schwellenwert des Zielzählers in einem Fall zu aktualisieren, dass das Zielobjekt der Zielzähler ist und die Zielkonfigurationsinformationen zum ersten Mal konfiguriert wird; oder
einen Schwellenwert des Zielzählers in einem Fall zu aktualisieren, dass das Zielobjekt der Zielzähler ist und die Zielkonfigurationsinformationen neu konfiguriert werden.

14. Endgerät nach Anspruch 13, wobei die Konfigurationsinformationen für die Erkennung von Uplink-Engpass-Fehlern Informationen über einen Zeitgeber, der für die Erkennung von Uplink-Engpass-Fehlern verwendet wird, oder Informationen über einen Zähler aufweisen, der für die Erkennung von Uplink-Engpass-Fehlern verwendet wird; oder
wobei die Konfigurationsinformationen für die Wiederherstellung bei Uplink-Engpass-Fehlern Informationen über einen Zeitgeber, der für die Wiederherstellung bei Uplink-Engpass-Fehlern verwendet wird, oder Informationen über einen Zähler aufweisen, der für die Wiederherstellung bei Uplink-Engpass-Fehlern verwendet wird.

15. Endgerät nach Anspruch 11, wobei der Zielzeitgeber der erste Zeitgeber ist; und
das Ausführungsmodul (601) speziell konfiguriert ist, um den ersten Zeitgeber in einem Fall zu starten oder neu zu starten, dass ein Uplink-Signal zum ersten Mal übertragen wird, nachdem die Konfigurationsinformationen für die Erkennung von Uplink-Engpass-Fehlern erhalten wurden.

## Revendications

1. Procédé de configuration, réalisé par un dispositif terminal, le procédé comprend :
la réalisation (202) d'une première opération cible sur un objet cible sur la base d'informations de configuration cible, dans lequel
dans le cas où les informations de configuration cible sont des informations de configuration pour une détection d'échec de congestion de liaison montante, l'objet cible est utilisé pour une détection d'échec de congestion de liaison montante ; et/ou
dans le cas où les informations de configuration cible sont des informations de configuration pour une récupération après échec de congestion de liaison montante, l'objet cible est utilisé pour une récupération après échec de congestion de liaison montante ;
dans lequel la réalisation (202) de la première opération cible sur l'objet cible est **caractérisée par** :
la réinitialisation, dans le cas où l'objet cible est un compteur cible et que les informations de configuration cible sont reconfigurées, du compteur cible, dans lequel, dans le cas où l'objet cible est utilisé pour une détection d'échec de congestion de liaison montante, un seuil du compteur cible est un seuil pour une détection d'échec de congestion de liaison montante, ou dans le cas où l'objet cible est utilisé pour une récupération après échec de congestion de liaison montante, un seuil du compteur cible est un seuil pour une récupération après échec de congestion de liaison montante ;
ou
le démarrage ou le redémarrage, dans les cas où l'objet cible est un premier temporisateur et où un échec de transmission de signal de liaison montante se produit pour la première fois après que les informations de configuration pour une détection d'échec de congestion de liaison montante sont obtenues, du premier temporisateur, dans lequel le premier temporisateur est utilisé pour une détection d'échec de congestion de liaison montante ;
ou
le démarrage ou le redémarrage, dans le cas où l'objet cible est un second temporisateur et une deuxième condition est remplie, du second temporisateur, dans lequel le second temporisateur est utilisé pour une récupération après échec de congestion de liaison montante, et la deuxième condition comprend au moins l'un des faits suivants : un échec de congestion de liaison montante se produit après que les informations de configuration pour une récupération après échec de congestion de liaison montante sont obtenues ; une fréquence transportant un signal de liaison montante est activée ou changée en une autre fréquence après que les informations de configuration pour une récupération après échec de congestion de liaison montante sont obtenues ; une cellule secondaire du dispositif terminal pour une récupération après échec de congestion de liaison montante est activée après que les informations de configuration pour une récupération après échec de congestion de liaison montante sont obtenues ; et une cellule secondaire du dispositif terminal pour une récupération après échec de congestion de liaison montante est ajoutée après que les informations de configuration pour une récupération après échec de congestion de liaison montante sont obtenues.

2. Procédé selon la revendication 1, dans lequel l'objet cible comprend au moins l'un des éléments suivants : un temporisateur cible et le compteur cible et le temporisateur cible comprend au moins l'un du premier temporisateur ou du second temporisateur, dans lequel
dans le cas où l'objet cible comprend le temporisateur cible, la première opération cible comprend au moins l'une des opérations suivantes : le démarrage du temporisateur cible, le redémarrage du temporisateur cible et l'arrêt du temporisateur cible ; et/ou
dans le cas où l'objet cible comprend le compteur cible, la première opération cible comprend au moins l'une des opérations suivantes : la mise à jour d'un seuil du compteur cible et la réinitialisation du compteur cible.

3. Procédé selon la revendication 2, dans lequel la réalisation (202) d'une première opération cible sur un objet cible sur la base d'informations de configuration cible comprend :
le démarrage du temporisateur cible dans les cas où l'objet cible est le temporisateur cible et où les informations de configuration cible sont configurées pour la première fois ; ou
le démarrage du temporisateur cible dans les cas où l'objet cible est le temporisateur cible, où le temporisateur cible n'est pas démarré et où les informations de configuration cible sont reconfigurées ; ou
le redémarrage ou l'arrêt du temporisateur cible dans les cas où l'objet cible est le temporisateur cible, où le temporisateur cible a été démarré et où les informations de configuration cible sont reconfigurées ; ou
la mise à jour d'un seuil du compteur cible dans les cas où l'objet cible est le compteur cible et où les informations de configuration cible sont configurées pour la première fois ; ou
la mise à jour d'un seuil du compteur cible dans les cas où l'objet cible est le compteur cible et où les informations de configuration cible sont reconfigurées.

4. Procédé selon la revendication 1, dans lequel les informations de configuration pour une détection d'échec de congestion de liaison montante comprennent au moins l'un des éléments suivants : des informations sur un temporisateur utilisé pour une détection d'échec de congestion de liaison montante ou des informations sur un compteur utilisé pour une détection d'échec de congestion de liaison montante ; ou
dans lequel les informations de configuration pour une récupération après échec de congestion de liaison montante comprennent au moins l'un des éléments suivants : des informations sur un temporisateur utilisé pour une récupération après échec de congestion de liaison montante, ou des informations sur un compteur utilisé pour une récupération après échec de congestion de liaison montante.

5. Procédé selon la revendication 4, dans lequel, dans le cas où le temporisateur cible est le premier temporisateur, la réalisation (202) de la première opération cible sur l'objet cible comprend :
le démarrage ou le redémarrage du premier temporisateur dans le cas où un signal de liaison montante est transmis pour la première fois après que les informations de configuration pour une détection d'échec de congestion de liaison montante sont obtenues.

6. Procédé selon la revendication 3, dans lequel l'arrêt du second temporisateur comprend :
l'arrêt du second temporisateur dans le cas où le dispositif terminal remplit une troisième condition, dans lequel
la troisième condition comprend au moins l'un des éléments suivants : une fréquence transportant un signal de liaison montante est désactivée ou changée en une autre fréquence après que les informations de configuration pour une récupération après échec de congestion de liaison montante sont obtenues ; une cellule secondaire du dispositif terminal pour une récupération après échec de congestion de liaison montante est désactivée après que les informations de configuration pour une récupération après échec de congestion de liaison montante sont obtenues ; et une cellule secondaire du dispositif terminal pour une récupération après échec de congestion de liaison montante est supprimée après que les informations de configuration pour une récupération après échec de congestion de liaison montante sont obtenues.

7. Procédé selon la revendication 1 ou 6, dans lequel le procédé comprend en outre :
la détermination, en utilisant l'objet cible, si une récupération après échec de congestion de liaison montante est réussie dans une cellule du dispositif terminal pour une récupération après échec de congestion de liaison montante.

8. Procédé selon la revendication 7, dans lequel la détermination, en utilisant l'objet cible, pour savoir si une récupération après échec de congestion de liaison montante est réussie dans une cellule du dispositif terminal pour une récupération après échec de congestion de liaison montante comprend :
dans le cas où l'objet cible comprend le compteur cible, si une valeur de comptage du compteur cible est supérieure ou égale au seuil de récupération après échec de congestion de liaison montante, la détermination que la récupération après échec de congestion de liaison montante a échoué dans la cellule du dispositif terminal pour une récupération après échec de congestion de liaison montante ; et
dans le cas où l'objet cible comprend le second compteur et le second temporisateur, pendant la durée du second temporisateur, si une valeur de comptage du second compteur est supérieure ou égale au seuil de récupération après échec de congestion de liaison montante, déterminer que la récupération après échec de congestion de liaison montante a échoué dans la cellule du dispositif terminal pour une récupération après échec de congestion de liaison montante.

9. Procédé selon la revendication 8, dans lequel, après la détermination, en utilisant l'objet cible, pour savoir si la récupération après échec de congestion de liaison montante est réussie dans une cellule du dispositif terminal pour une récupération après échec de congestion de liaison montante, le procédé comprend en outre :
la réalisation d'une seconde opération cible dans le cas où il est déterminé, en utilisant l'objet cible, que la récupération après échec de congestion de liaison montante a échoué dans la cellule du dispositif terminal pour une récupération après échec de congestion de liaison montante, dans lequel
la seconde opération cible comprend au moins l'une des opérations suivantes : une première opération et une seconde opération ;
la première opération consiste à déclencher une procédure de rétablissement de connexion sans fil ; et
la seconde opération consiste à transmettre des informations d'échec à un dispositif de réseau, dans lequel les informations d'échec sont utilisées pour indiquer que la récupération après échec de congestion de liaison montante a échoué dans la cellule du dispositif terminal pour une récupération après échec de congestion de liaison montante.

10. Procédé selon la revendication 9, dans lequel
dans le cas où la récupération après échec de congestion de liaison montante a échoué dans une cellule primaire du dispositif terminal, la seconde opération cible comprend au moins l'une des opérations suivantes : la première opération et la seconde opération ; ou
dans le cas où la récupération après échec de congestion de liaison montante a échoué dans toutes les cellules d'un groupe de cellules maîtresses du dispositif terminal, la seconde opération cible comprend au moins l'une des opérations suivantes : la première opération et la seconde opération ; ou
dans le cas où la récupération après échec de congestion de liaison montante a échoué dans toutes les cellules d'un groupe de cellules secondaires du dispositif terminal, la seconde opération cible est la seconde opération ; ou
dans le cas où la récupération après échec de congestion de liaison montante a échoué dans une cellule secondaire principale du dispositif terminal, la seconde opération cible est la second opération ; ou
dans le cas où la récupération après échec de congestion de liaison montante a échoué dans une cellule secondaire du dispositif terminal, la seconde opération cible est la seconde opération.

11. Dispositif terminal, dans lequel le dispositif terminal comprend un module d'exécution (601),
le module d'exécution (601) est configuré pour effectuer une première opération cible sur un objet cible sur la base d'informations de configuration cible, dans lequel
dans le cas où les informations de configuration cible sont des informations de configuration pour une détection d'échec de congestion de liaison montante, l'objet cible est utilisé pour une détection d'échec de congestion de liaison montante ; et/ou
dans le cas où les informations de configuration cible sont des informations de configuration pour une récupération après échec de congestion de liaison montante, l'objet cible est utilisé pour une récupération après échec de congestion de liaison montante ;
le module d'exécution (601) est **caractérisé par** :
la réinitialisation, dans les cas où l'objet cible est un compteur cible et où les informations de configuration cible sont reconfigurées, du compteur cible, dans lequel, dans le cas où l'objet cible est utilisé pour une détection d'échec de congestion de liaison montante, un seuil du compteur cible est un seuil pour une détection d'échec de congestion de liaison montante, ou dans le cas où l'objet cible est utilisé pour une récupération après échec de congestion de liaison montante, un seuil du compteur cible est un seuil pour une récupération après échec de congestion de liaison montante ;
ou
le démarrage ou le redémarrage, dans les cas où l'objet cible est un premier temporisateur et où un échec de transmission de signal de liaison montante se produit pour la première fois après que les informations de configuration pour une détection d'échec de congestion de liaison montante sont obtenues, du premier temporisateur, dans lequel le premier temporisateur est utilisé pour une détection d'échec de congestion de liaison montante ;
ou
le démarrage ou le redémarrage, dans le cas où l'objet cible est un second temporisateur et une deuxième condition est remplie, du second temporisateur, dans lequel le second temporisateur est utilisé pour une récupération après échec de congestion de liaison montante, et la deuxième condition comprend au moins l'un des faits suivants : un échec de congestion de liaison montante se produit après que les informations de configuration pour une récupération après échec de congestion de liaison montante sont obtenues ; une fréquence transportant un signal de liaison montante est activée ou changée en une autre fréquence après que les informations de configuration pour une récupération après échec de congestion de liaison montante sont obtenues ; une cellule secondaire du dispositif terminal (600) pour une récupération après échec de congestion de liaison montante est activée après que les informations de configuration pour une récupération après échec de congestion de liaison montante sont obtenues ; et une cellule secondaire du dispositif terminal (600) pour une récupération après échec de congestion de liaison montante est ajoutée après que les informations de configuration pour une récupération après échec de congestion de liaison montante sont obtenues.

12. Dispositif terminal selon la revendication 11, dans lequel l'objet cible comprend au moins l'un des éléments suivants : un temporisateur cible et le compteur cible et le temporisateur cible comprend au moins l'un du premier temporisateur ou du second temporisateur, dans lequel
dans le cas où l'objet cible comprend le temporisateur cible, la première opération cible comprend au moins l'une des opérations suivantes : le démarrage du temporisateur cible, le redémarrage du temporisateur cible et l'arrêt du temporisateur cible ; et/ou
dans le cas où l'objet cible comprend le compteur cible, la première opération cible comprend au moins l'une des opérations suivantes : la mise à jour d'un seuil du compteur cible et la réinitialisation du compteur cible.

13. Dispositif terminal selon la revendication 12, dans lequel
le module d'exécution (601) est spécifiquement configuré pour : démarrer le temporisateur cible dans les cas où l'objet cible est le temporisateur cible et où les informations de configuration cible sont configurées pour la première fois ; ou
démarrer le temporisateur cible dans les cas où l'objet cible est le temporisateur cible, où le temporisateur cible n'est pas démarré et où les informations de configuration cible sont reconfigurées ; ou
redémarrer ou arrêter le temporisateur cible dans les cas où l'objet cible est le temporisateur cible, où le temporisateur cible a été démarré et où les informations de configuration cible sont reconfigurées ; ou
mettre à jour un seuil du compteur cible dans les cas où l'objet cible est le compteur cible et où les informations de configuration cible sont configurées pour la première fois ; ou
mettre à jour un seuil du compteur cible dans les cas où l'objet cible est le compteur cible et où les informations de configuration cible sont reconfigurées.

14. Dispositif terminal selon la revendication 13, dans lequel les informations de configuration pour une détection d'échec de congestion de liaison montante comprennent au moins l'un des éléments suivants : des informations sur un temporisateur utilisé pour une détection d'échec de congestion de liaison montante, ou des informations sur un compteur utilisé pour une détection d'échec de congestion de liaison montante ; ou
dans lequel les informations de configuration pour une récupération après échec de congestion de liaison montante comprennent au moins l'un des éléments suivants : des informations sur un temporisateur utilisé pour une récupération après échec de congestion de liaison montante, ou des informations sur un compteur utilisé pour une récupération après échec de congestion de liaison montante.

15. Dispositif terminal selon la revendication 11, dans lequel le temporisateur cible est le premier temporisateur ; et
le module d'exécution (601) est spécifiquement configuré pour démarrer ou redémarrer le premier temporisateur dans le cas où un signal de liaison montante est transmis pour la première fois après que les informations de configuration pour une détection d'échec de congestion de liaison montante sont obtenues.
